(19) Europäisches Patentamt
European Patent Office
Office européen des brevets

(11) EP 4 529 768 A1

(12) DEMANDE DE BREVET EUROPEEN

(43) Date de publication:
**02.04.2025 Bulletin 2025/14**

(21) Numéro de dépôt: **23306598.6**

(22) Date de dépôt: **26.09.2023**

(51) Classification Internationale des Brevets (IPC):
***A01N 65/08** (2009.01)* ***A01P 3/00** (2006.01)*

(52) Classification Coopérative des Brevets (CPC):
**A01P 3/00; A01N 65/08**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeur: **Berkem Developpement**
**33290 Blanquefort (FR)**

(72) Inventeurs:
- **MESSAOUDI, Daouia**
  **33290 Blanquefort (FR)**
- **FAHY, Olivier**
  **33290 Blanquefort (FR)**

(74) Mandataire: **Plasseraud IP**
**104 Rue de Richelieu**
**CS92104**
**75080 Paris Cedex 02 (FR)**

# (54) UTILISATION D’UN EXTRAIT DE RAISIN POUR LA DÉFENSE DES PLANTES CONTRE DES CHAMPIGNONS PHYTOPATHOGÈNES

(57) La présente invention concerne un procédé de défense d’une plante contre un ou plusieurs champignons phytopathogènes à l’aide d’une composition contenant, comme substance active antifongique, un extrait de raisin. L’invention concerne également une composition phytosanitaire comprenant un extrait de raisin en tant que substance active antifongique ainsi que l’utilisation d’un extrait de raisin à titre de substance active antifongique pour la préparation d’une composition phytosanitaire.

EP 4 529 768 A1

## Description

### Domaine technique

La présente invention relève du domaine de la défense des plantes contre des champignons phytopathogènes.

### Technique antérieure

Les champignons sont la principale cause de maladies chez les plantes et sont responsables d'environ 70 % des maladies des plantes cultivées. On estime entre dix mille et vingt mille espèces le nombre d'organismes du type champignons ou pseudo-champignons susceptibles d'infecter les plantes (contre une cinquantaine susceptible d'infecter l'homme).

Les pertes économiques annuelles dues aux maladies fongiques dans l'agriculture mondiale, avant et après la récolte, étaient estimées en 2019 à plus de 200 milliards de dollars (Jun-Xia An et al., the Journal of Antibiotics, 76:131-182, 2023).

A titre d'exemple, les fusarioses constituent les maladies fongiques parmi les plus importantes. Elles sont courantes chez les céréales, notamment causées par certains champignons des genres Fusarium et Microdochium. Le développement de ces maladies dans les cultures de céréales varie beaucoup selon les espèces et variétés considérées et selon les conditions climatiques au moment de l'épiaison et début de floraison. Ainsi, La fusariose de l'épi de blé peut occasionner des pertes importantes de rendement, (entre 20 et 40% du rendement) mais surtout elle peut provoquer une contamination des grains par la production de mycotoxines (telles que la mycotoxine « déoxynivalénol » ou « DON ») et donc une dégradation de la qualité sanitaire du grain de blé. Selon les espèces de Fusarium, la fusariose se manifestera différemment. Ainsi, on distingue la fusariose des racines et du collet, la fusariose des organes aériens, la fusariose vasculaire, etc.

Les champignons phytopathogènes causent des maladies dans un large éventail de cultures, y compris les fruits et les légumes. La perte de récoltes causée par les champignons est un problème grave qui ne peut être ignoré.

La lutte contre les champignons phytopathogènes repose actuellement essentiellement sur l'utilisation de produits chimiques de synthèse.

Il est indéniable que les produits phytosanitaires à base de produits chimiques de synthèse sont efficaces. Cependant, leur utilisation peut être la cause de problèmes environnementaux et de santé publique, d'autant plus que les risques inhérents à certains d'entre eux sont mal évalués.

De ce fait, des scandales et des polémiques plus ou moins médiatisés ont éclaté ces dernières années en France et dans le monde. L'un des derniers exemples en date est le chlordécone, dont la famille des organochlorés pose des problèmes de bioaccumulation dans les organismes par la voie des chaînes alimentaires.

Toutes ces conséquences néfastes et leur médiatisation ont entraîné une prise de conscience et des craintes chez les utilisateurs de ces produits phytosanitaires ainsi que chez les consommateurs. Cette nouvelle perception des produits phytosanitaires a eu des répercussions sur le plan politique traduites dans des textes réglementaires incitant à des changements de pratiques.

Ces changements de législation ont notamment eu pour effet le retrait de certaines substances du marché et le durcissement de critères d'approbation de nouvelles substances actives, ce qui a pour effet que les agriculteurs n'ont parfois plus les moyens de prévenir certaines maladies.

Il existe donc un besoin de développer des compléments et d'alternatives aux produits phytosanitaires à base de produits chimiques de synthèse.

Le biocontrôle peut être défini comme un ensemble de méthodes de protection des végétaux basé sur l'utilisation de mécanismes naturels. En droit français, les produits de biocontrôle sont définis à l'article L. 253-6 du code rural et de la pêche maritime comme des agents et des produits utilisant des mécanismes naturels dans le cadre de la lutte intégrée contre les ennemis des cultures. Ils comprennent en particulier : les macro-organismes ; et les produits phytopharmaceutiques qui sont composés de micro-organismes, de médiateurs chimiques tels que les phéromones et les kairomones, ou de substances naturelles d'origine végétale, animale ou minérale. Les macro-organismes utiles aux végétaux sont essentiellement des invertébrés, notamment des acariens, insectes et nématodes, utilisés pour protéger les plantes des bioagresseurs via la lutte biologique. Les produits phytopharmaceutiques de biocontrôle sont des produits phytopharmaceutiques autorisés à l'issue d'une évaluation complète des risques pour la santé humaine, la santé animale et l'environnement et conforme aux exigences européennes. Leur spécificité est liée à leur caractère naturel ou leur mode d'action reposant sur des mécanismes naturels.

Dans ce contexte, il existe un besoin pour la fourniture de nouveaux agents de lutte contre les champignons phytopathogènes d'origine naturelle.

## Résumé

L'invention concerne selon un premier objet un procédé de défense d'une plante contre un ou plusieurs champignons phytopathogènes à l'aide d'une composition contenant, comme substance active antifongique, un extrait de raisin.

L'extrait de raisin est de préférence un extrait de pépins de raisin.

Avantageusement, l'extrait de raisin a une activité fongicide et/ou fongistatique.

La plante peut avantageusement être choisie parmi les céréales telles que le riz, le blé, le maïs, l'orge, l'avoine, le seigle, le sorgho, le millet, la canne à sucre, des plantes ornementales comme les graminées à gazon, les miscanthus; les Rosaceae tels que l'abricotier, l'amandier, le cerisier, le cognassier, le fraisier, le framboisier, le pêcher, le poirier, le pommier, le prunier et aussi les plantes ornementales comme les rosiers, les potentilles; les Vitaceae tels que les vignes et notamment Vitis Vinifera; les Brassicacae tels que les colzas, les moutardes, les choux, les navets, les radis; les Amaranthaceae tels que les betteraves, les épinards; les Cucurbitaceae tels que les concombres, les citrouilles, les courges, les melons, les pastèques; les Solanaceae tels que les pommes de terre, les tomates, les aubergines, les poivrons, les piments, les tabacs, les pétunias; les Rutaceae tels que les citronniers, les orangers les pamplemoussiers; les Asteraceae tels que les chicorées dont l'endive, les laitues, les artichauts, les tournesols, mais aussi des plantes ornementales comme les chrysanthèmes, les dahlias, les asters; les Fabaceae tels que les pois, les haricots, le soja, les lentilles, les arachides, les luzernes mais aussi des plantes ornementales comme les lupins, les mimosas; les Juglandaceae tels que le noyer, les Betulaceae tels que le noisetier, les Anacardiaceae tels que le pistachier, le manguier, l'anarcardier, les Fagaceae tels que le chataignier, les Moraceae tels que le figuier, le murier blanc, les Oleaceae tels que l'olivier, les Actinidiaceae tel que l'arbre a kiwi, les Lauraceae tels que l'avocatier, les Musaccae tels que le bananier, les Rubiaceae tels que la garance, le caféier, les Theaceae tels que le camellia, le théier, les Sterculiaceae tels que le cacaoyer; les Musaceae tels que le bananier, les Liliaceae tels que les tulipes, les jacinthes, les narcisses; les Apiacea tels que les persils, les céleris, les fenouils, les panais.

Le champignon phytopathogène peut avantageusement être choisi parmi Fusarium spp. responsable de la fusariose de nombreuses plantes dont des céréales telles que le blé et le maïs, le framboisier, le peuplier, la pomme de terre tel que f. culmorum, f. graminum f. oxysporum, f. solani, f.nivale, f. germinearum; Giberella spp. responsable de la fusariose de nombreuses plantes dont le blé, le maïs, le framboisier, le peuplier, la pomme de terre tel que Gibberella avenacea; Monographella spp. responsable de la moisissure des neiges typiquement du blé tel que Monographella nivalis ; Verticillium spp. responsable de la verticilliose, Pythium spp. responsable de la fonte des semis ou pourriture racinaire de la betterave, poivrons, courges, chrysanthèmes, gazon, tel que pythium irregulare ; Thanatephorus spp. responsable du rhizoctone brun, de fonte de semis sur de nombreuses plantes dont tomate, pomme de terre, betterave, maïs, carotte, haricot, choux frisé, salsifis tel que Thanatephorus cucumeris; Trichoderma spp. responsable de la pourriture de nombreux agrumes tel que Trichoderma viride; Sclerotinia spp. responsable de la sclérotiniose ou pourriture blanche de nombreuses plantes dont blé, colza, tournesol, soja, lin, pois, féverole, carottes, céleris, haricots, pomme de terre tel que Sclerotinia sclerotiorum; Alternaria spp. responsable de l'alternariose des solanacées dont la tomate tel que Alternaria solani; Penicillium spp. responsable de la fusariose de l'ananas tel que Penicillium funiculosum ; Aspergillus spp. responsable de la moisissure noire de nombreuses plantes dont l'ail et l'oignon, tel que Aspergillus niger, ou pouvant produire des toxines dans les grains de céréales pouvant produire des toxines dans les grains de céréales tel qu'Aspergillus ochraceus; Ceratocystis spp. responsable de flétrissement chez nombreuses plantes dont le cacaoyer, la patate douce, le platane tel que Ceratocystis pilifera ou Ceratocystis platani; Pyrenophora spp. responsable de l'helminthosporiose de l'orge tel que Pyrenophora teres ; Cercospora spp. responsable de la cercosporiose de nombreuses plantes dont la betterave tel que Cercospora beticola; Pyrenophora spp. responsable de l'helminthosporiose de plantes dont le blé et l'orge, tel que Pyrenophora triticirepentis et Pyrenophora graminea; Botryotinia spp. responsable de la pourriture grise de nombreuses plantes dont tomate, framboise, fraise, tournesol, haricot, concombre, salade, rose, ail, ognon, roses, gerberas, pivoines, oeillets, lis et chrysanthèmes, tel que Botryotinia fuckeliana ou Botrytis cinerea; Phytophthora spp. responsable du mildiou et de chancres de nombreuses plantes dont la pomme de terre la tomate, la vigne, le châtaignier ou le pommier, tel que Phytophthora infestans ou Phytophtora cactorum; Pyricularia spp. Tels que Magnaporte grisea responsable de la pyriculariose des céréales ; Puccinia spp. tels que puccinia triticina responsable de la rouille du blé, puccinia graminis responsable des rouilles des céréales, Oidium neolycopersici responsable de l'oïdium de la tomate, Blumeria graminis responsable du blanc des céréales; Colletotrichum spp. notamment Colletotrichum acutatum responsable des anthracnoses sur fraisiers et oliviers; Alternaria spp. responsable de l'alternariose sur les feuilles de carottes et les pommes de terre; Mycosphaerella spp. notamment M. graminicol (ou Zymoseptoria tritici) responsable de la septoriose sur le blé et Septoria lycopersici responsable de le septoriose de la tomate; Venturia sp. tel que Venturia inaequalis responsable de la tavelure du pommier; Phomopsis spp. notamment Phomopsis viticola responsable de l'excoriose du bois de la vigne; Helminthosporium sp. notamment Helminthosporium avenae responsable de la fonte des semis de l'avoin; Monilia spp. notamment Monilia fructigena responsable de la moniliose des arbres fruitiers notamment des prunes; Cochliobolus sp. notamment Chochiobulus carbonum (Bipolaris zeicola) responsable de

l'helminthosporiose du mais; Ramularia beticola responsable de la ramulariose de la betterave; Rhynchosporium spp. tel que Rhynchosporium secalis responsable de la maladie des taches brunes de l'orge; Cladosporium sp. tel que Cladosporium fulvum responsable de la cladosporiose sur tomates, Didymella sp. tel que Didymella bryoniae responsable du chancre gommeux des cucurbitacees; Phoma sp. tels que Phoma betae responsable de la maladie du pied noir de la betterave, Phoma batata sur patate douce, Phoma solani responsable de nécroses racinaires (fonte de semis); Ascophyta sp. tel que Ascophyta tritici sur blé; Stemphylium sp. tel que S. solani, S. lycopersici responsable de la stemphyliose sur tomates, Stemphylium vesicarium (ou pleospora allii) responsable de la stemphyliose du poirier; Glomerella cingulata responsable de l'anthracnose sur pommier et poirier; Plasmopara viticola responsable du mildiou de la vigne; Bremia lactucae pour le mildiou de la laitue; Peronospora sp. responsable des mildiou sur betterave, épinard, luzerne, chou, tabac, soja et pois, Diaporthe sp. tel que Diaporthe ampelina provoquant des dépérissements des pieds de vigne, diaporthe phaseolorum responsable de la phomopsis du soja, Elsinoe sp. tel qu'Elsinoe ampelina responsable de l'anthracnose de la vigne, Verticilium sp. tel que Verticillium dahliae responsable de la verticilliose sur tournesol; Pyrenopezzia sp. tel que Pyrenopezzia brassicae responsable de la cylindrosporiose du colza.

Avantageusement, le procédé comprend l'application, à titre curatif ou préventif, de la composition sur la plante de préférence sur les parties aériennes de la plante telles que les feuilles et/ou les fruits de la plante, sur les semences de la plante, ou sur le sol où pousse où est susceptible de pousser la plante.

Avantageusement, la composition mise en oeuvre comprend entre 1% et 90% d'extrait de raisin, de préférence de 5 à 50% d'extrait de raisin, % en poids total de composition.

Selon un second objet, l'invention concerne une composition phytosanitaire comprenant, en tant que substance active antifongique, un extrait de raisin de préférence tel que défini dans le premier objet de l'invention, un diluant agronomiquement acceptable et un adjuvant agronomiquement acceptable.

La composition comprend avantageusement entre 1% et 90% d'extrait de raisin, de préférence de 5 à 50% d'extrait de raisin, % en poids total de composition.

L'invention concerne également l'utilisation d'un extrait de raisin de préférence tel que défini dans le premier objet de l'invention à titre de substance active antifongique pour la préparation d'une composition phytosanitaire selon le second objet de l'invention ou pour la préparation d'une composition intermédiaire de ladite composition.

## Description détaillée

### Procédé de défense

Selon un premier objet, la présente invention concerne un procédé de défense d'une plante contre un ou plusieurs champignons phytopathogènes à l'aide d'une composition contenant, comme substance active antifongique, un extrait de raisin.

On entend par « procédé de défense d'une plante » un procédé permettant la prévention et le traitement curatif de maladies associées à des champignons phytopathogènes. Le procédé permet notamment de prévenir, stopper, ralentir ou retarder le développement des dites maladies ou encore de diminuer l'infection des plantes par le ou lesdits champignons phytopathogènes et/ou les symptômes associés.

Extrait de raisin (Vitis vinifera L)

L'extrait de raisin selon la présente invention appartient au genre Vitis et est préférentiellement un extrait de l'espèce *Vitis vinifera L.*

Typiquement, l'extrait de raisin pourra être obtenu à partir de bourgeons, de fleurs, de fruits, de feuilles, de graines, de la peau, de racines, de pépins.

Préférentiellement, l'extrait de raisin est obtenu à partir de pépins.

Préférentiellement, l'extrait de raisin est obtenu à partir des pépins de l'espèce *Vitis vinifera L.*

La majorité des composés phénoliques des pépins de raisin peuvent être classé en deux catégories notamment les acides phénoliques (acide gallique) et les flavan-3-ols encore appelés tanins catéchiques, tanins condensés, oligomères procyanidoliques (OPC en sigle).

Les flavan-3-ols des pépins de raisin sont constitués d'oligomères et polymères de catéchine et épicatéchine. Leur structure de base est un noyau 2-phénylchromane comportant deux cycles benzéniques A et B représenté ci-dessous :

[Chem1]

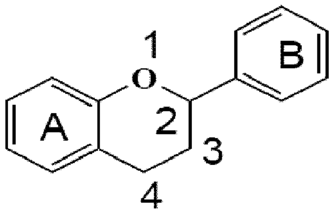

Dans la famille des OPC on distingue les deux séries suivantes :

- Les proanthocyanidols de la série B (1 liaison interflavanique C4-C8 et C4-C6 et 2 liaisons éthers par dimère de type liaison interflavanique C4-C8 ou liaison interflavanique C4-C6,
- Les proanthocyanidols de la série A (1 liaison interflavanique et 3 liaisons éthers par dimère). On entend par liaison interflavanique la liaison entre des unités monomériques (catéchine, épicatéchine, etc).

La composition chimique des flavan-3-ols des pépins de raisin est très complexe. On distingue les flavanols monomères (catéchine, épicatéchine, épicatéchine-3-O-gallate), diverses combinaisons entre ces molécules monomériques allant du dimère (2 unités monomères) au décamère (10 unités monomères). Le mode de liaison interflavanique implique le carbone C4-C8 ou C4-C6 et caractéristique des oligomères de la série B.

L'extrait de raisin selon la présente invention est de préférence un extrait de pépins de raisin présentant une teneur totale en oligomères proanthocyanidines d'au moins 20%, de préférence d'au moins 30%, % en poids par rapport au poids de l'extrait.

L'extrait de raisin selon la présente invention est de préférence un extrait de pépins de raisin présentant une teneur totale en oligomères proanthocyanidines comprise entre 20% et 70% et une teneur totale en polyphénols supérieure à 50%, % en poids par rapport au poids de l'extrait.

Selon un mode de réalisation, l'extrait de raisin selon la présente invention comprend une teneur totale oligomères proanthocyanidines comprise entre 20% et 70%, typiquement entre comprise entre 20% et 30%, entre 20% et 50%, entre 20% et 60%, ou entre 30% et 70%, entre 40% et 70%, entre 50% et 70%, % en poids par rapport au poids de l'extrait.

L'extrait de raisin selon la présente invention est de préférence un extrait de pépins de raisin comprenant :

une teneur en polyphénols supérieure à 50%,
avec de préférence une teneur totale en oligomères proanthocyanidines telle que décrite ci-dessus, typiquement une teneur totale en oligomères proanthocyanidines comprise entre 20% et 70%,
% en poids par rapport au poids de l'extrait.

Selon un mode de réalisation, la teneur en flavanols monomères est comprise entre 18 et 32% de l'extrait, et celle en flavanols dimères est comprise entre 30 et 40%.

Selon un autre mode de réalisation, la teneur en flavanols monomères est comprise entre 5 et 7% de l'extrait, et celle des flavanols dimères est comprise entre 5 et 7%, % en poids par rapport au poids de l'extrait.

L'extrait de raisin selon la présente invention est de préférence un extrait de pépins de raisin comprenant un ou plusieurs polyphénols parmi la procyanidine B1, la procyanidine B3, la 3-catéchine, procyanidine dimère, la procyanidine B4, la procyanidine B2, l'épicatéchine, la procyanidine B2 gallate et l'épicatéchine gallate.

Préférentiellement, la teneur de l'extrait de raisin en monomère de catéchines est inférieure à 5% et la teneur en proanthocyanidines dimère B1 est inférieure à 8%, % en poids par rapport au poids de l'extrait.

L'extrait de raisin est fabriqué à partir des pépins de raisin de l'espèce *Vitis vinifera L.*

L'extrait de raisin selon l'invention est de préférence un extrait de pépins de raisin non fermentées, de préférence un extrait de pépins de raisin secs, débarrassés de leur pulpe, et non fermentés.

L'extrait de raisin est de préférence obtenu par un procédé comprenant au moins une étape d'extraction solide/liquide à l'eau de pépins de raisin séchés, débarrassés de leur pulpe et non fermentés, une étape de récupération de la phase aqueuse, et une étape de séchage de la phase aqueuse. L'extrait pourra être obtenu par toute technique connue de l'homme du métier. L'homme du métier peut par exemple se référer aux procédés détaillés dans les brevets FR 2 092 743 et FR 2 722 498.

Dans un mode de réalisation (1), l'extrait de raisin est un extrait de pépins de raisin obtenu par un procédé comprenant :

a) la fourniture de pépins de raisin séchés, débarrassés de leur pulpe, et non fermentés,
b) une extraction solide/liquide à l'eau des pépins,
c) la récupération de la phase aqueuse par filtration,
d) une purification de la phase aqueuse par extraction liquide/liquide,
e) le séchage de la phase aqueuse purifiée, par exemple par atomisation ou lyophilisation.

L'extrait de pépins de raisin obtenu selon ce mode de réalisation est notamment caractérisé par :

une teneur totale en oligomères proanthocyanidines d'au moins 20%,
une teneur en flavanols monomères comprise entre 18 et 32%,
une teneur en flavanol dimères comprise entre 30 et 40%,
% en poids par rapport au poids de l'extrait.

Dans un mode de réalisation (2), l'extrait de raisin est un extrait de pépins de raisin obtenu par un procédé comprenant :

a) la fourniture de pépin de raisin secs, débarrassés de leur pulpe, et non fermentés,
b) une extraction solide/liquide à l'eau des pépins
c) la récupération de la phase aqueuse par filtration
d) le séchage de la phase aqueuse purifiée, par exemple par atomisation ou lyophilisation.

Par rapport à l'extrait de pépins de raisins obtenu selon le procédé du mode de réalisation (1), dans le procédé du mode de réalisation (2), la phase aqueuse est directement séchée (atomisation ou lyophilisation) sans purification.

L'extrait de pépins de raisins obtenu selon le mode de réalisation (2) contient le même type de polyphénols que celui obtenu selon le mode réalisation (1) mais en des quantités moins importantes. Cet extrait de pépins de raisin est notamment caractérisé par :

une teneur totale en oligomères proanthocyanidines d'au moins 20%,
une teneur en flavanols monomères comprise 5 et 7%,
une teneur en flavanol dimères comprise entre 5 et 7%,
% en poids par rapport au poids de l'extrait.

<u>**Substance active antifongique**</u>

La composition utilisée dans le procédé selon l'invention comprend l'extrait de raisin à titre de substance active antifongique.

Dans le cadre de la présente invention, on entend par « substance active antifongique » une substance permettant d'éliminer ou de limiter le développement d'au moins un champignon phytopathogène.

Avantageusement, dans le cadre de la présente invention, l'extrait de raisin est une substance active antifongique per se, c'est-à-dire une substance active antifongique qui est capable d'agir seule et directement sur le ou les champignons phytopathogènes.

Avantageusement, l'extrait de raisin est capable d'agir en tant que substance active antifongique indépendamment de la présence d'une ou plusieurs autres substances actives antifongiques, en particulier de la présence d'une ou plusieurs autres substances actives antifongiques de synthèse.

Avantageusement, l'extrait de raisin est capable d'agir en tant que substance active antifongique indépendamment d'éventuels mécanismes de défenses que la plante met en place où une est susceptible de mettre en place contre un champignon phytopathogène.

Une substance antifongique peut présenter une activité fongicide et/ou fongistatique. L'activité fongicide correspond à un fort ralentissement de la croissance mycélienne par lyse du champignon phytopathogène. L'activité fongistatique correspond à un fort ralentissement de la croissance mycélienne par inhibition de la prolifération du champignon phytopathogène.

Selon la dose d'extrait et le champignon phytopathogène considéré, un même extrait de raisin selon l'invention peut présenter une activité fongicide, une activité fongistatique ou à la fois une activité fongicide et une activité fongistatique. Il est parfois difficile de distinguer ces deux catégories d'activité.

La société Demanderesse a démontré par des tests réalisés *in vitro* que l'extrait de raisin selon l'invention présente une activité antifongique à l'encontre d'une grande variété de champignons phytopathogènes.

L'activité antifongique de l'extrait de raisin selon l'invention peut notamment être évaluée selon le test suivant :

a) on prépare une solution aqueuse d'extrait de raisin à 5% en poids d'extrait de raisin par rapport au poids de la solution ;

b) on prépare un milieu de culture en mélangeant de la gélose dextrosée à la pomme de terre et de l'eau déminéralisée à un température de 39°C ;

c) on prépare des boîtes de Pétri de contrôle : c1) on verse le milieu de culture à base de gélose dextrosée à la pomme de terre et d'eau déminéralisée à 39°C dans des boites pétri de 85 mm de diamètre, c2) on laisse refroidir, c3) lorsque les boîtes de Pétri ont atteint la température ambiante, on applique un inoculum du champignon phytopathogène à tester au coeur de la boîte de Pétri :

d) on prépare des boîtes de Pétri de test : d1) dans le milieu de culture le milieu de culture à base de gélose dextrosée à la pomme de terre et d'eau déminéralisée à 39°C, on ajoute de la solution aqueuse d'extrait de raisin jusqu'à ce que le milieu de culture comprenne 0.25% en poids d'extrait par rapport au poids de milieu de culture, d2) on verse le milieu de culture comprenant l'extrait de raisin dans des boites pétri de 85 mm de diamètre, d3) on laisse refroidir, c3) lorsque les boîtes de Pétri ont atteint la température ambiante, on applique un inoculum du champignon phytopathogène à tester au coeur de la boîte de Pétri ;

e) on conserve les boîtes de Pétri de contrôle et les boites de Pétri de test dans une chambre de culture à 22°C et dans l'obscurité pendant 5 jours ;

f) on mesure la taille du mycélium qui s'est développé dans les boites de pétri de test (MT) et de contrôle (MC). L'efficacité de l'extrait de raisin est calculée selon la formule :

[Math1]

$$efficacité = 100 - (\frac{MT}{MC} \times 100)$$

Avec MT et MC en millimètres et l'efficacité une valeur adimensionnelle en %.

Dans un mode de réalisation, on considère que l'extrait de raisin est capable d'agir à titre de substance active antifongique vis-à-vis d'un champignon phytopathogène particulier dès lors qu'il présente une efficacité vis-à-vis de ce champignon phytopathogène, déterminée selon le test décrit supra, d'au moins 20%, de préférence d'au moins 30%.

Dans un mode de réalisation, on considère que l'extrait de raisin selon l'invention présente une forte activité antifongique vis-à-vis d'un champignon phytopathogène particulier lorsqu'il présente une efficacité vis-à-vis de ce champignon phytopathogène, déterminée selon le test décrit supra, d'au moins 80%, de préférence d'au moins 90%, de préférence de 100%. Cette forte activité antifongique peut correspondre à une forte activité fongicide et/ou fongistatique.

Dans un mode de réalisation, on considère que l'extrait de raisin selon l'invention présente une activité fongicide vis-à-vis d'un champignon phytopathogène lorsqu'il présente une efficacité selon le test décrit supra d'au moins 90%, de préférence d'au moins 95%, de préférence encore de 100%.

## Plantes

La plante à défendre peut être choisie parmi les céréales telles que le riz, le blé, le maïs, l'orge, l'avoine, le seigle, le sorgho, le millet, la canne à sucre, des plantes ornementales comme les graminées à gazon, les miscanthus; les Rosaceae tels que l'abricotier, l'amandier, le cerisier, le cognassier, le fraisier, le framboisier, le pêcher, le poirier, le pommier, le prunier et aussi les plantes ornementales comme les rosiers, les potentilles; les Vitaceae tels que les vignes et notamment Vitis Vinifera; les Brassicacae tels que les colzas, les moutardes, les choux, les navets, les radis; les Amaranthaceae tels que les betteraves, les épinards; les Cucurbitaceae tels que les concombres, les citrouilles, les courges, les melons, les pastèques; les Solanaceae tels que les pommes de terre, les tomates, les aubergines, les poivrons, les piments, les tabacs, les pétunias; les Rutaceae tels que les citronniers, les orangers les pamplemoussiers; les Asteraceae tels que les chicorées dont l'endive, les laitues, les artichauts, les tournesols, mais aussi des plantes ornementales comme les chrysanthèmes, les dahlias, les asters; les Fabaceae tels que les pois, les haricots, le soja, les lentilles, les arachides, les luzernes mais aussi des plantes ornementales comme les lupins, les mimosas; les Juglandaceae tels que le noyer, les Betulaceae tels que le noisetier, les Anacardiaceae tels que le pistachier, le manguier, l'anarcardier, les Fagaceae tels que le chataignier, les Moraceae tels que le figuier, le murier blanc, les Oleaceae tels que l'olivier, les Actinidiaceae tel que l'arbre a kiwi, les Lauraceae tels que l'avocatier, les Musaccae tels que le bananier, les Rubiaceae tels que la garance, le caféier, les Theaceae tels que le camellia, le théier, les Sterculiaceae tels que le cacaoyer; les Musaceae tels que le bananier, les Liliaceae tels que les tulipes, les jacinthes, les narcisses; les Apiacea tels que les persils, les céleris, les fenouils, les panais.

Champignons phytopathogènes

La société Demanderesse a démontré que l'extrait de raisin selon l'invention présente une activité antifongique à l'encontre de nombreux champignons phytopathogènes.

On entend par « champignon phytopathogène » toute espèce de champignon qui provoque une maladie chez une plante. Chez les plantes, la maladie est un état phénotypique anormal, qui présente des écarts, appelés « symptômes », par rapport au phénotype normal désiré, et qui a pour effet de réduire la croissance de la plante, sa productivité et/ou son utilité pour l'homme.

Dans un mode de réalisation, le procédé est de préférence utilisé pour défendre la plante contre un ou des champignons phytopathogènes choisis parmi Fusarium spp. responsable de la fusariose de nombreuses plantes dont des céréales telles que le blé et le maïs, le framboisier, le peuplier, la pomme de terre tel que f. culmorum, f. graminum f. oxysporum, f. solani, f.nivale, f. germinearum; Giberella spp. responsable de la fusariose de nombreuses plantes dont le blé, le maïs, le framboisier, le peuplier, la pomme de terre tel que Gibberella avenacea; Monographella spp. responsable de la moisissure des neiges typiquement du blé tel que Monographella nivalis ; Verticillium spp. responsable de la verticilliose, Pythium spp. responsable de la fonte des semis ou pourriture racinaire de la betterave, poivrons, courges, chrysanthèmes, gazon, tel que pythium irregulare ; Thanatephorus spp. responsable du rhizoctone brun, de fonte de semis sur de nombreuses plantes dont tomate, pomme de terre, betterave, maïs, carotte, haricot, choux frisé, salsifis tel que Thanatephorus cucumeris; Trichoderma spp. responsable de la pourriture de nombreux agrumes tel que Trichoderma viride; Sclerotinia spp. responsable de la sclérotiniose ou pourriture blanche de nombreuses plantes dont blé, colza, tournesol, soja, lin, pois, féverole, carottes, céleris, haricots, pomme de terre tel que Sclerotinia sclerotiorum; Alternaria spp. responsable de l'alternariose des solanacées dont la tomate tel que Alternaria solani; Penicillium spp. responsable de la fusariose de l'ananas tel que Penicillium funiculosum ; Aspergillus spp. responsable de la moisissure noire de nombreuses plantes dont l'ail et l'oignon, tel que Aspergillus niger, ou pouvant produire des toxines dans les grains de céréales pouvant produire des toxines dans les grains de céréales tel qu'Aspergillus ochraceus; Ceratocystis spp. responsable de flétrissement chez nombreuses plantes dont le cacaoyer, la patate douce, le platane tel que Ceratocystis pilifera ou Ceratocystis platani; Pyrenophora spp. responsable de l'helminthosporiose de l'orge tel que Pyrenophora teres ; Cercospora spp. responsable de la cercosporiose de nombreuses plantes dont la betterave tel que Cercospora beticola; Pyrenophora spp. responsable de l'helminthosporiose de plantes dont le blé et l'orge, tel que Pyrenophora triticirepentis et Pyrenophora graminea; Botryotinia spp. responsable de la pourriture grise de nombreuses plantes dont tomate, framboise, fraise, tournesol, haricot, concombre, salade, rose, ail, ognon, roses, gerberas, pivoines, oeillets, lis et chrysanthèmes, tel que Botryotinia fuckeliana ou Botrytis cinerea; Phytophthora spp. responsable du mildiou et de chancres de nombreuses plantes dont la pomme de terre la tomate, la vigne, le châtaignier ou le pommier, tel que Phytophthora infestans ou Phytophtora cactorum; Pyricularia spp. tels que Magnaporte grisea responsable de la pyriculariose des cereales; Puccinia spp. tels que puccinia triticina responsable de la rouille du blé, puccinia graminis responsable des rouilles des céréales, Oidium neolycopersici responsable de l'oïdium de la tomate, Blumeria graminis responsable du blanc des céréales; Colletotrichum spp. notamment Colletotrichum acutatum responsable des anthracnoses sur fraisiers et oliviers; Alternaria spp. responsable de l'altemariose sur les feuilles de carottes et les pommes de terre; Mycosphaerella spp. notamment M. graminicol (ou Zymoseptoria tritici) responsable de la septoriose sur le blé et Septoria lycopersici responsable de le septoriose de la tomate; Venturia sp. tel que Venturia inaequalis responsable de la tavelure du pommier; Phomopsis spp. notamment Phomopsis viticola responsable de l'excoriose du bois de la vigne; Helminthosporium sp. notamment Helminthosporium avenae responsable de la fonte des semis de l'avoin; Monilia spp. notamment Monilia fructigena responsable de la moniliose des arbres fruitiers notamment des prunes; Cochliobolus sp. notamment Chochiobulus carbonum (Bipolaris zeicola) responsable de l'helminthosporiose du mais; Ramularia beticola responsable de la ramulariose de la betterave; Rhynchosporium spp. tel que Rhynchosporium secalis responsable de la maladie des taches brunes de l'orge; Cladosporium sp. tel que Cladosporium fulvum responsable de la cladosporiose sur tomates, Didymella sp. tel que Didymella bryoniae responsable du chancre gommeux des cucurbitacees; Phoma sp. tels que Phoma betae responsable de la maladie du pied noir de la betterave, Phoma batata sur patate douce, Phoma solani responsable de nécroses racinaires (fonte de semis); Ascophyta sp. tel que Ascophyta tritici sur blé; Stemphylium sp. tel que S. solani, S. lycopersici responsable de la stemphyliose sur tomates, Stemphylium vesicarium (ou pleospora allii) responsable de la stemphyliose du poirier; Glomerella cingulata responsable de l'anthracnose sur pommier et poirier; Plasmopara viticola responsable du mildiou de la vigne; Bremia lactucae pour le mildiou de la laitue; Peronospora sp. responsable des mildiou sur betterave, épinard, luzerne, chou, tabac, soja et pois, Diaporthe sp. tel que Diaporthe ampelina provoquant des dépérissements des pieds de vigne, diaporthe phaseolorum responsable de la phomopsis du soja, Elsinoe sp. tel qu'Elsinoe ampelina responsable de l'anthracnose de la vigne, Verticilium sp. tel que Verticillium dahliae responsable de la verticilliose sur tournesol; Pyrenopezzia sp. tel que Pyrenopezzia brassicae responsable de la cylindrosporiose du colza.

Avantageusement, le procédé selon l'invention est utilisé pour défendre la plante contre Fusarium spp. responsable de la fusariose de nombreuses plantes dont des céréales telles que le blé et le maïs, le framboisier, le

peuplier, la pomme de terre, tel que f. culmorum, f. graminum f. oxysporum, f. solani, f.nivale, , f. germinearum.

Avantageusement, le procédé selon l'invention est utilisé pour défendre la plante contre Giberella spp. responsable de la fusariose de nombreuses plantes dont des céréales telles que le blé, le maïs, le framboisier, le peuplier, la pomme de terre tel que Gibberella avenacea.

Avantageusement, le procédé selon l'invention est utilisé pour défendre la plante contre Monographella spp. responsable de la moisissure des neiges typiquement du blé tel que Monographella nivalis.

Avantageusement, le procédé selon l'invention est utilisé pour défendre la plante contre de Verticillium spp. responsable de la verticilliose.

Avantageusement, le procédé selon l'invention est utilisé pour défendre la plante contre Pythium spp. responsable de la fonte des semis ou pourriture racinaire de la betterave, poivrons, courges, chrysanthèmes, gazon, tel que pythium irregulare.

Avantageusement, le procédé selon l'invention est utilisé pour défendre la plante contre Thanatephorus spp. responsable du rhizoctone brun, de fonte de semis sur de nombreuses plantes dont tomate, pomme de terre, betterave, maïs, carotte, haricot, choux frisé, salsifis tel que Thanatephorus cucumeris.

Avantageusement, le procédé selon l'invention est utilisé pour défendre la plante contre Trichoderma spp. responsable de la pourriture de nombreux agrumes tel que Trichoderma viride.

Avantageusement, le procédé selon l'invention est utilisé pour défendre la plante contre Sclerotinia spp. responsable de la sclérotiniose ou pourriture blanche de nombreuses plantes dont blé, colza, tournesol, soja, lin, pois, féverole, carottes, céleris, haricots, pomme de terre tel que Sclerotinia sclerotiorum.

Avantageusement, le procédé selon l'invention est utilisé pour défendre la plante contre Alternaria spp. responsable de l'alternariose des solanacées dont la tomate tel que Alternaria solani.

Avantageusement, le procédé selon l'invention est utilisé pour défendre la plante contre Penicillium spp. responsable de la fusariose de l'ananas tel que Penicillium funiculosum.

Avantageusement, le procédé selon l'invention est utilisé pour défendre la plante contre Aspergillus sp. responsable de la moisissure noire de nombreuses plantes dont l'ail et l'oignon, tel que Aspergillus niger, ou pouvant produire des toxines dans les grains de céréales pouvant produire des toxines dans les grains de cereales tel qu'Aspergillus ochraceus.

Avantageusement, le procédé selon l'invention est utilisé pour défendre la plante contre Ceratocystis spp. responsable de flétrissement chez nombreuses plantes dont le cacaoyer, la patate douce, le platane tel que Ceratocystis pilifera ou Ceratocystis platani.

Avantageusement, le procédé selon l'invention est utilisé pour défendre la plante contre Pyrenophora spp. responsable de l'helminthosporiose de l'orge tel que Pyrenophora teres.

Avantageusement, le procédé selon l'invention est utilisé pour défendre la plante contre Cercospora spp. responsable de la cercosporiose de nombreuses plantes dont la betterave tel que Cercospora beticola.

Avantageusement, le procédé selon l'invention est utilisé pour défendre la plante contre Pyrenophora spp. responsable de l'helminthosporiose de plantes dont le blé et l'orge, tel que Pyrenophora triticirepentis et Pyrenophora graminea.

Avantageusement, le procédé selon l'invention est utilisé pour défendre la plante contre Botryotinia spp. responsable de la pourriture grise de nombreuses plantes dont tomate, framboise, fraise, tournesol, haricot, concombre, salade, rose, ail, ognon, roses, gerberas, pivoines, oeillets, lis et chrysanthèmes, tel que Botryotinia fuckeliana ou Botrytis cinerea.

Avantageusement, le procédé selon l'invention est utilisé pour défendre la plante contre Phytophthora spp. responsable du mildiou et de chancres de nombreuses plantes dont la pomme de terre la tomate, la vigne, le châtaignier ou le pommier, tel que Phytophthora infestans ou Phytophtora cactorum.

## Mise en oeuvre sur la plante, les semences ou le sol

Dans un mode de réalisation, le procédé comprend l'application, à titre curatif ou préventif, de la composition sur la plante en particulier les parties aériennes de la plante telles que les feuilles et/ou les fruits de la plante, sur les semences de la plante, ou sur le sol où pousse où est susceptible de pousser la plante.

Dans un mode de réalisation, la composition est appliquée avant la contamination par le ou les champignons phytopathogènes.

Dans un mode de réalisation, la composition est appliquée pendant ou après la contamination par le ou les champignons pathogènes.

## Quantité efficace

Dans un mode de réalisation, le procédé comprend l'application d'une quantité efficace de composition.

L'expression « quantité efficace » ou « quantité agronomiquement efficace » fait référence à une quantité de composition, soit en une seule dose soit en tant que partie d'une série de doses, qui est efficace pour produire l'effet souhaité de défense d'une plante contre le ou les champignons phytopathogènes.

Autrement dit, dans la présente invention, on entend par « quantité efficace » une quantité de composition selon l'invention qui diminue les dommages causés aux cultures par le ou les champignons phytopathogènes par rapport à un groupe témoin non traité par la composition.

Lorsque la composition est appliquée curativement, c'est-à-dire pendant ou après la contamination par le ou les champignons phytopathogènes, la quantité efficace permet avantageusement d'éliminer totalement ou partiellement la population de champignons phytopathogènes, ou de réduire la croissance de la population de champignons phytopathogènes.

Lorsque la composition est appliquée préventivement, c'est-à-dire avant la contamination par le ou les champignons phytopathogènes, la quantité efficace permet avantageusement de prévenir totalement ou partiellement le développement du ou des champignons phytopathogènes.

La quantité efficace d'une composition donnée contre un champignon donné dépend notamment de la teneur en extrait de la composition, de la forme par exemple liquide ou solide de la composition, du type d'équipement utilisé, de la méthode et de la fréquence d'application souhaitées et du champignon phytopathogène à combattre.

La quantité efficace est de préférence non phytotoxique.

Dans le domaine agronomique, cette quantité efficace est typiquement comprise entre 0,01 kilogramme (kg) et 20 kg d'extrait de raisin par hectare et peut aisément être ajustée par l'homme du métier.

## Composition utilisée dans le procédé de l'invention

La composition utilisée dans le procédé de l'invention peut comprendre l'extrait de raisin sous forme pure ou formulée.

La composition peut se présenter sous n'importe quelle forme utilisable dans le domaine phytopharmaceutique.

La composition peut être sous forme liquide ou solide.

A titre d'exemple, la composition peut être sous la forme d'une émulsion, d'une suspension, d'un granulé, ou d'une poudre.

Dans un mode de réalisation, la composition est sous une forme adaptée pour une application par pulvérisation, telles qu'une solution aqueuse ou une émulsion. Ces compositions usuellement désignées sous le terme de « bouillie phytosanitaire » sont préparées par les méthodes usuelles connues de l'homme du métier.

Dans un mode de réalisation, la composition comprend l'extrait de raisin et un diluant agronomiquement acceptable.

On entend par diluant est une matière solide ou un liquide (solvant) incorporé à une préparation et destiné à en abaisser la concentration en matière active. Ce sont le plus souvent des huiles végétales dans le cas des liquides, de l'argile ou du talc dans le cas des solides. Dans ce dernier cas le diluant est usuellement dénommé charge.

On entend par « agronomiquement acceptable » une substance qui n'est pas biologiquement ou autrement indésirable, c'est-à-dire qui peut être incorporée dans une composition destinée à être administrée à une plante sans causer d'effets biologiques indésirables ou sans interagir de manière délétère avec l'un des autres composants de la composition dans laquelle elle est contenue, notamment en inhibant ou diminuant les propriétés antifongiques de l'extrait de raisin.

Dans un mode de réalisation, la composition est sous forme liquide et comprend l'extrait de raisin dans un solvant tel que l'eau ou une huile. La composition peut ainsi être une solution aqueuse ou une émulsion.

On entend par émulsion des compositions comportant une phase aqueuse et une phase huileuse dispersées l'une dans l'autre, par exemple des émulsions eau-dans-huile (E/H) ou huile-dans-eau (H/E) ou multiple (E/H/E ou H/E/H).

Selon un mode de réalisation, la composition se présente sous forme d'émulsion eau-dans-huile.

Les émulsions eau-dans-huile (E/H) comportent une phase aqueuse dispersée dans une phase huileuse. Ces émulsions comportent une phase continue huileuse.

Selon un mode de réalisation, la composition se présente sous forme d'émulsion huile-dans-eau. Ces émulsions comportent une phase huileuse dispersée dans une phase aqueuse. Ces émulsions comportent une phase continue aqueuse.

La composition peut comprendre l'extrait de raisin à une teneur comprise entre 1 % à 90 %, de préférence de 5 % à 50 %, % en poids total de composition.

Dans un mode de réalisation, la composition comprend une teneur en extrait de raisin supérieure à 5%, 10%, 15%, 20%, 25%, 30%, 35%, 45%, 50%, % en poids total de composition.

Dans un mode de réalisation, la composition comprend une teneur en extrait de raisin inférieure à 20%, 25% ; 35%, 40%, 45%, 50%, 55%, 60%, 65%, 70%, 75%, 80%, 85%, ou 90%, % en poids total de composition.

Dans un mode de réalisation, la composition comprend une teneur en extrait de raisin supérieure à 5% et

inférieure à 20%, 25% ; 35%, 40%, 45%, 50%, 55%, 60%, 65%, 70%, 75%, 80%, 85%, ou 90% % en poids total de composition.

Dans un mode de réalisation, la composition a une teneur en extrait de raisin comprise entre 1% et 70%, entre 5% et 70%, entre 10% et 70%, entre 15% et 70%, entre 30% et 70%, entre 25% et 70%, entre 30% et 70%, entre 35% et 70%, entre 45% et 70%, entre 50% et 70%, entre 55% et 70%, entre 60% et 70%, entre 65% et 70%, % en poids total de composition.

Dans un mode de réalisation, la composition a une teneur en extrait de raisin comprise entre 1% et 50%, entre 5% et 50%, entre 10% et 50%, entre 15% et 50%, entre 20% et 50%, entre 25% et 50%, entre 30% et 50%, entre 35% et 50%, entre 45% et 50%, % en poids total de composition.

Dans un mode de réalisation, la composition a une teneur en extrait de raisin comprise entre 1% et 30%, entre 5% et 30%, entre 10% et 30%, entre 15% et 30%, entre 20% et 30%, entre 25% et 30%, % en poids total de composition.

Dans un mode de réalisation, la composition a une teneur en extrait de raisin comprise entre 30% et 95%, entre 30% et 90%, entre 30% et 85%, entre 30% et 80%, entre 30% et 75%, entre 30% et 70%, entre 30% et 65%, entre 30% et 60%, entre 30% et 55%, entre 50% et 70%, entre 30% et 45%, entre 30% et 45%, entre 30% et 45%, % en poids total de composition.

La composition peut en outre comprendre un ou plusieurs adjuvants agronomiquement acceptables.

En fonction du type de cultures à traiter et/ou des conditions météorologiques, l'adjuvant peut comprendre un ou plusieurs adjuvants sélectionné parmi des stabilisants, des dispersants, des agents d'antidérive (notamment pour éviter une dispersion de la composition et un meilleur ciblage des culture), des agents mouillants, des agents anti-mousse, des agents anti UV, des agents humectant (notamment pour limiter l'évaporation de l'eau) tels que par exemple des polyols, des agents facilitant la pénétration de l'agent actif au travers de la cuticule, des adjuvants nutritifs permettant d'améliorer la germination des spores.

L'homme du métier sait que le ou les adjuvants sont à adapter au mode d'action et caractéristiques du principe actif, à la formulation de la composition souhaitée, au type de plante ciblée (l'emploi d'un agent mouillant sera par exemple particulièrement indiqué de plante dont les feuilles sont particulièrement hydrophobes) ou encore, par exemple, aux conditions météorologiques.

Ainsi, un adjuvant de la composition peut par exemple être choisi parmi :

- un dispersant et/ou stabilisant notamment sélectionné parmi les alcools éthoxylés, les esters gras de sorbitane, les alkylpolyglycosides, les copolymères oxyde d'éthylène / oxyde de propylène (OE / PO), les guars, le xanthane, la lécithine de soja, les urées modifiées au stéarate de sorbitan éthoxylé, les polyamides modifiés à l'urée, les polyuréthanes modifiés à l'urée, les résines de poly-butadiène à terminaison hydroxyle 20, éther glycol, polyols (polyéthylène glycol), les polyamides, les polyester amides, les dérivés d'alkyl polysaccharides, l'hydroxypropylcellulose, l'hydroxypropylmethyle cellulose, l'hydroxypropylethyle cellulose, l'hydroxyethylcellulose, les composés de type ethylcellulose ;
- un agent antidérive tel que, par exemple, des viscosifiants comme la gomme de guar, la gomme xanthane, polyacrylamide, alcool polyvinylique, alcool terpéniques, lécitine de soja, oligomère terpénique ;
- un mouillant tel que par exemple, des tensioactifs non ioniques de type polysorbates, esters de sorbitane, polyéthers trisiloxanes modifiés, polyoxyéthylène alkyl éthers, des alcools alkoxylés, des dérivés d'alkyl poly-saccharides, des huiles minérales, huiles végétales, esters d'huiles végétales, des alcools terpéniques, des latex synthétiques, des lécithines de soja ;
- un adjuvant retardant l'évaporation, tel que par exemple, une huile végétale telle que l'huile de maïs ou de soja ou leurs mélanges, des esters d'acides gras végétaux tels que des esters méthyliques d'acides gras d'huile de maïs ou de soja ou des mélanges de ceux-ci ; du polyéthylène glycol tel que du polyéthylène glycol 300 à 600 et 1000 ou un humectant tel que glycérol, fructose, glucose, isomalt, lactose, maltitol, mannitol, polydextrose, sorbitol, ou saccharose ;
- un agent de viscosité, tel que par exemple, la gomme xanthane, la gomme guar, ou la carboxyméthylcellulose ;
- des huiles, ou leur dérivés, telles que par exemple, des huiles végétales (Soja, colza, arachide, tournesol), des esters d'huiles végétales ;
- un composé nutritif tel que par exemple les acides aminés, saccharose, glucoses, oligosaccharides, farine de maïs, chitosan, gélatine ou extrait de levure.

La composition peut comprendre plusieurs adjuvants ayant la même fonction et/ou plusieurs adjuvants de fonction différentes. Ainsi par exemple, un tensioactif pourra être utilisé en tant qu'agent stabilisant et/ou agent dispersant.

De préférence, la teneur de la composition en extrait de raisin est déterminée de façon à permettre la mise en oeuvre de l'étape d'application du procédé de l'invention et d'atteindre une concentration efficace tel que détaillée supra sur les cultures.

Dans un mode de réalisation, la composition peut être utilisée dans le procédé de l'invention en association avec

au moins une autre composition pour le traitement des plantes, notamment en association avec un engrais, un biostimulant ou un autre produit phytosanitaire, de manière simultanée, séparée ou séquentielle,

Dans un mode de réalisation, la composition ne comprend pas d'autres substances actives antifongiques de synthèse.

Dans un mode de réalisation, la composition ne comprend pas d'autres substances actives antifongiques de synthèse ou d'origine naturelle.

**Composition phytosanitaire**

La présente invention concerne également une composition susceptible d'être utilisée dans le procédé selon l'invention.

Ainsi, la présente invention a pour second objet une composition phytosanitaire comprenant, en tant que substance active antifongique, un extrait de raisin, un diluant agronomiquement acceptable et un adjuvant agronomiquement acceptable.

La forme de la composition phytosanitaire, ainsi que la nature et la teneur des constituants de la composition phytosanitaire, en particulier l'extrait de raisin, du diluant agronomiquement acceptable et de l'adjuvant agronomiquement acceptable sont tels que décrits dans la présente description.

Ainsi, la composition phytosanitaire peut être sous forme liquide ou solide tel que décrit dans la présente description.

La composition phytosanitaire comprend l'extrait de raisin dans des teneurs telles que décrites dans la présente description, en particulier peut comprendre l'extrait de raisin avec une teneur comprise entre 1 % à 90 %, de préférence de 5 % à 50 %, % en poids total de composition.

**Utilisation d'un extrait de raisin pour la préparation d'une composition phytosanitaire.**

La présente invention concerne également l'utilisation d'un extrait de raisin à titre de substance active antifongique pour la préparation d'une composition phytosanitaire telle que définie au second objet de l'invention, ou pour la préparation d'une composition intermédiaire de ladite composition.

Dans un mode de réalisation, l'extrait de raisin est utilisé pour la préparation d'une composition prête à l'emploi. Cette composition prête à l'emploi peut notamment être stockée et utilisée telle quelle selon le procédé de l'invention exposé ci-dessus.

Alternativement, l'extrait de raisin est utilisé pour la préparation d'une composition intermédiaire. Cette composition intermédiaire peut être stockée mais, avant son utilisation dans le procédé selon le premier objet de l'invention, doit être diluée pour atteindre la concentration en extrait de raisin désirée et/ou formulée avec des adjuvants adaptés pour l'application souhaitée de la composition selon le procédé de l'invention. La composition intermédiaire peut être utilisée pour préparer extemporanément une composition prête à l'emploi.

Une telle composition intermédiaire peut être formulée sous forme solide ou liquide, par exemple sous forme de poudre mouillable, de granulés dispersibles, de phase huileuse, puis, selon les cas, être mise en solution par dispersion, suspension ou dilution pour obtenir les teneurs en extrait de raisin désirée dans la composition phytosanitaire prête à l'emploi. La composition intermédiaire, peut notamment être sous une forme liquide et destinée à être simplement diluée avant son application. Classiquement, une composition intermédiaire sera plus concentrée en extrait de raisin que la composition phytosanitaire prête à l'emploi.

Dans un mode de réalisation, la composition est une composition liquide prête à l'emploi ou une composition liquide intermédiaire. La composition liquide prête à l'emploi peut être sous des formes telles que définies au premier objet et au second objet de l'invention. La composition intermédiaire liquide peut par exemple être sous la forme :

- d'un concentré soluble (SL) : solution de matière active à diluer dans l'eau, additionnée d'agents tensio-actifs ;
- d'une suspension concentrée (SC) : la ou les matières actives solides, insolubles dans l'eau sont maintenues en suspension concentrée dans l'eau, en présence de mouillants, de dispersants, d'épaississants (bentonite, silice) ou d'agent anti-redéposition, d'antigel (e.g. éthylène glycol, urée) d'antimoussants et parfois de bactéricides (méthanal ou formol). Ces préparations sont diluées dans l'eau au moment de l'emploi ;
- d'un concentré émulsionnable (EC) : la ou les matières actives sont mises en solution concentrée dans un solvant organique et additionnée d'émulsifiants chargés de stabiliser les émulsions obtenues au moment de l'emploi par dilution dans l'eau ;
- Les émulsions concentrées (EW) : la ou les matières actives sont dissoutes dans un solvant organique. La solution additionnée d'agents émulsifiants est dispersée dans une petite quantité d'eau. Cette présentation est généralement moins toxique et moins inflammable que les concentrés émulsionnables.

Dans un mode de réalisation, la composition est une composition solide prête à l'emploi ou une composition liquide intermédiaire. La composition solide prête à l'emploi peut être sous des formes telles que définies au premier objet et au second objet de l'invention. La composition intermédiaire sous forme solide peut par exemple être sous la forme :

- d'une poudre mouillable (WP) : la ou les matières actives sont finement broyées (solide) ou fixées (liquide) sur un support adsorbant ou poreux (e.g. silice). Des agents tensio-actifs (e.g. dodécylbenzène, lignosulfonate de Ca, Al ou Na) et des charges de dilution (e.g. kaolin, talc, craie, silicate d'aluminium et magnésium ou carbonate de Ca) sont ajoutés ainsi que des agents antiredépositions, anti-statique ou anti-mousse. Des stabilisateurs (anti-oxygène et tampon pH) peuvent être inclus pour les rendre compatibles avec d'autres préparations. Ces poudres doivent être dispersées dans l'eau au moment de l'emploi,
- de granulés à disperser (WG) : des granulés sont obtenus par l'agglomération avec un peu d'eau de matière active, de charge et d'agents liants et dispersants, suivi d'un séchage. Ces poudres doivent être dispersées dans l'eau au moment de l'emploi, ou
- de microgranulés (MG) : identiques aux WG mais d'une taille plus petite (0,1 à 0,6 mm).

Les compositions intermédiaires peuvent comprendre des adjuvants tels que ceux mentionnés au premier objet et second objet de l'invention. La personne du métier saura les déterminer aisément.

## Exemples

### Exemple 1 : Evaluation de l'activité antifongique d'un extrait de pépins de raisin selon l'invention sur des souches de champignon phytopathogène

Résumé

L'objectif de l'essai est d'évaluer l'efficacité d'un extrait de raisin selon l'invention sur des souches de champignons phytopathogènes dans des boîtes de Pétri.
Les caractéristiques des souches testées sont détaillées ci-dessous.
L'essai a été réalisé dans une chambre de croissance avec une croissance de divers pathogènes dans des boîtes de Pétri.
Des boîtes de Pétri ont été préparées. Le milieu de culture a été préparé en mélangeant de la gélose dextrosée à la pomme de terre avec de l'eau déminéralisée à une température de 39°C. L'extrait de raisin est incorporé dans le milieu de culture à 39°C. Le milieu de culture final est versé dans des boîtes de Pétri de 85 mm de diamètre. Juste après l'incorporation et lorsque les boîtes de Pétri ont atteint la température ambiante, un inoculum de pathogène a été appliqué au coeur des boîtes de Pétri.
Les souches testées sont les souches n°:

6781,6863 ,6955 ,7948 ,7956 ,7973 ,8112 9218 ,9219 ,9222 ,9242 ,9257 ,9267 ,9269 ,9276 ,9277 ,9278 ,9285 ,9288 ,9298 ,9281 et 37A2.
Les boîtes de Pétri ont été conservées dans une chambre de culture à 22°C et dans l'obscurité. Le développement du mycélium a été mesuré 5 et 12 jours après l'incorporation de l'extrait de raisin.

Matériel et méthodes

Descriptif des traitements

L'extrait de raisin testé est un extrait de raisin nommé ci-après Lab2015_018, obtenu selon le procédé du mode de réalisation (1) de la présente description.
Une solution aqueuse d'extrait de pépin de raisin à 5% en poids d'extrait de raisin par rapport au poids de la solution est préparée.
La solution est dispersée à différentes doses dans le milieu de culture à base de gélose dextrosée à la pomme de terre et d'eau déminéralisée.
Les doses préparées sont : 1% v/v (soit 0,05% en poids d'extrait par rapport au poids de milieu de culture), 5% v/v (soit 0.25% en poids d'extrait par rapport au poids de milieu de culture), 25% (soit 1.25% en poids d'extrait par rapport au poids de milieu de culture).
Les conditions de traitement sont résumées dans le Tableau 1 ci-dessous :

[Tableau 1]

| Nom Traitement | Description |
|---|---|
| 1 Non traité (NT) | Boite de pétri ensemencée avec l'agent pathogène non traitée |
| 2 Lab2015_018 5% 1 % v/v | Boite de pétri ensemencée avec l'agent pathogène et traitée à 1 % v/v % d'extrait de pépins de raisin |
| 3 Lab2015_018 5% 5 % v/v | Boite de pétri ensemencée avec l'agent pathogène et traitée à 5 % v/v % d'extrait de pépins de raisin |
| 4 Lab2015_018 5% 25 % v/v | Boite de pétri ensemencée avec l'agent pathogène et traitée à 25 % v/v % d'extrait de pépins de raisin |
| 5 Lab2015_018 5% 50 % v/v | Boite de pétri ensemencée avec l'agent pathogène et traitée à 50 % v/v % d'extrait de pépins de raisin |
| 6 Blanc 10 % v/v | Boite de pétri non ensemencée avec l'agent pathogène et traitée à 10 % v/v % d'extrait de pépins de raisin |

Les analyses sont réalisées en triplicat (3 réplicats pour chaque traitement).

Descriptif des mesures effectuées

L'efficacité des traitements avec l'extrait de pépins de raisin Lab2015_018 est évaluée en mesurant la taille des mycélium. L'unité est le millimètre (mm).

Descriptif des champignons phytopathogènes

Les caractéristiques des souches de champignons phytopathogènes étudiées sont détaillées dans le **Tableau** ci-dessous :

[Tableau 2]

| No. | Code | Nom scientifique | Nom commun | Attribut : | Réf. souche |
|---|---|---|---|---|---|
| | | | | Plante | |
| 1D | FUSACU | Fusarium culmorum | fusariose des céréales | Maïs | 6781 |
| 2D | FUSAGR | Fusarium graminum | Fusarium graminum | Maïs | 6863 |
| 3D | GIBBAV | Gibberella avenacea | fusariose des céréales | Maïs | 6955 |
| 4D | MONGNI | Monographella nivalis | fusariose des céréales | Blé d'hiver | 7948 |
| 5D | FUSACU | Fusarium culmorum | fusariose des céréales | Blé d'hiver | 7956 |
| 6D | FUSAGR | Fusarium graminum | Fusarium graminum | Blé d'hiver | 7973 |
| 7D | VERTSP | Verticillium sp. | Verticillium sp. | Tomate | 8112 |
| 8D | PYTHIR | Pythium irregulare | nécrose vasculaire noire de la betterave | betterave | 9218 |
| 9D | RHIZSO | Thanatephorus cucumeris | rhizoctone noir de la pomme de terre | Pomme de terre | 9219 |
| 10D | FUSASO | Fusarium solani | fusariose du pied | Pomme de terre | 9222 |
| 11D | RHIZSO | Thanatephorus cucumeris | rhizoctone noir de la pomme de terre | Maïs | 9242 |
| 12D | TRCDVI | Trichoderma viride | Pourriture des fruits d'agrumes | Maïs | 9257 |
| 13D | SCLESC | Sclerotinia sclerotiorum | pourriture blanche | Tournesol | 9267 |
| 14D | ALTESO | Alternaria solani | alternariose des solanacées | Tomate | 9269 |

(suite)

| No. | Code | Nom scientifique | Nom commun | Attribut : Plante | Réf. souche |
|---|---|---|---|---|---|
| 15D | PENIFU | Penicillium funiculosum | Pourriture de l'ananas | Non renseigné | 9276 |
| 16D | ASPENI | Aspergillus niger | moisissure noire du bulbe de l'oignon | Non renseigné | 9277 |
| 17D | CERAPI | Ceratocystis pilifera | bois bleu | Non renseigné | 9278 |
| 18D | PYRNTE | Pyrenophora teres | taches brunes de l'orge | orge | 9285 |
| 19D | CERCBE | Cercospora beticola | cercosporiose de la betterave | betterave | 9288 |
| 20D | PYRNTR | Pyrenophora tritici-repentis | helminthosporiose du blé | Blé d'hiver | 9298 |
| 21D | BOTRCI | Botryotinia fuckeliana | pourriture grise | fraise | 9281 |
| 23D | PHYTIN | Phytophthora infestans | mildiou de la pomme de terre | Pomme de terre | 37A2 |
| 24D | VERTSP | Verticillium sp | verticilliose | Non renseigné | Non renseigné |

Conditions de la chambre de croissance :

Les boites de pétri sont placées dans une chambre de croissance dans les conditions suivantes :

Température : 22°C
Humidité : 60-80 %
Photopériode : 24h de nuit

Déroulement de l'essai

Des boîtes de Pétri ont été préparées. Le milieu de culture a été préparé en mélangeant de la gélose dextrosée de pomme de terre avec de l'eau déminéralisée. Lorsque le milieu de culture a atteint une température de 39°C dans l'autoclave, le produit est incorporé. Le milieu de culture final est versé dans des boîtes de Pétri de 85 mm de diamètre. Juste après l'incorporation et lorsque les boîtes de Pétri ont atteint la température ambiante, un inoculum de champignon phytopathogène a été appliqué au coeur des boîtes de Pétri. Les boîtes de Pétri ont été conservées dans une chambre de culture à 22°C. Le développement du mycélium a été mesuré (unité : mm) 5 et 12 jours après l'incorporation du produit.
Les mesures du développement du mycélium pour le traitement N°5 (Lab2015_018 5% - 50% v/v) n'ont pas été possibles. Pour ce traitement, le milieu de culture des boîtes de Pétri a été rapidement endommagé par le produit.
Certaines valeurs peuvent être manquantes en raison d'une contamination des boîtes de Pétri.
L'essai a été réalisé conformément aux exigences du protocole. Le développement du mycélium était homogène pour une bonne fiabilité de l'essai. Les données acquises ont permis de répondre aux questions clés et rendent l'essai fiable :

- Aucun problème n'a été rencontré lors du mélange ou de l'application de l'une des formulations testées.
- En raison d'une contamination externe, certaines boîtes de Pétri ont été exclues de l'essai.
- L'essai peut être considéré comme valide.

Evaluation

L'évaluation est résumée dans le Tableau ci-dessous :

[Tableau 3]

| Jour après traitement (DAA) | Type d'évaluation | Type d'échantillon évalué |
|---|---|---|
| 0 DAA | Incorporation + inoculation | 1 boite de pétri |
| 5 DAA | Efficacité : mesure du diamètre du mycélium | 1 boite de pétri |

(suite)

| Jour après traitement (DAA) | Type d'évaluation | Type d'échantillon évalué |
|---|---|---|
| 12 DAA | Efficacité : Mesure du diamètre du mycélium | 1 boite de pétri |

Analyse statistique

Le logiciel ARM a été utilisé pour l'ensemble de l'analyse des données.

Avant l'analyse de la variance (ANOVA), l'homogénéité de la variance a été vérifiée à l'aide du test de Bartlett. En cas d'échec du test de Bartlett, une transformation standard des données « Arcsin racine carrée pour cent » a été effectuée.

Les données non transformées ou transformées ont ensuite été analysées par ANOVA. Pour l'évaluation de l'efficacité des herbicides, le traitement non traité a été exclu de l'analyse statistique.

La probabilité que des différences non significatives se produisent entre les moyennes des traitements est calculée comme la valeur de probabilité F Prob (F). Un test de comparaison multiple (détaillé dans les tableaux de résultats spécifiques) avec un niveau de confiance de 95% a été appliqué pour séparer tout traitement significatif. Ceux-ci sont éventuellement indiqués par une lettre : les moyennes de traitement ayant au moins une lettre en commun ne sont pas significativement différentes.

## Résultats

Résultats (efficacité)

L'efficacité est évaluée en mesurant à 5 et 12 jours après traitement la taille du mycélium et est exprimée infra en valeur et en pourcentage par rapport au contrôle (NT). Ainsi, « 0 (100.0%) signifie que le mycélium ne s'est pas développé (0 mm) i.e. une efficacité totale (100.0%).

Fusarium culmorum - Maïs (1D)

[Tableau 4]

| Jour | 5 DAA | 12 DAA |
|---|---|---|
| N° d'essai | 1 | 25 |
| 1 NT | 34 (0.0%) | 80 (0.0%) |
| 2 Lab2015 018 5% - 1 % v/v | 0 a (100.0%) | 14 a (82.5%) |
| 3 Lab2015 018 5% - 5 % v/v | 0 a (100.0%) | 0 b (100.0%) |
| 4 Lab2015 018 5% - 25 % v/v | 0 a (100.0%) | 0 b (100.0%) |
| 5 Lab2015 018 5% - 50 a % v/v | . | . |
| 6 Blanc - 10 a % v/v | 0 a (100.0%) | 0 b (100.0%) |

Fusarium graminum - Maïs (2D)

[Tableau 5]

| Jour | 5 DAA | 12 DAA |
|---|---|---|
| N° d'essai | 2 | 26 |
| 1 NT | 38 (0.0%) | 85 (0.0%) |
| 2 Lab2015_018 5% - 1 % v/v | 0 a (100.0%) | 9a (89.2%) |
| 3 Lab2015_018 5% - 5 % v/v | 0 a (100.0%) | 0 b (100.0%) |

(suite)

| Jour | 5 DAA | 12 DAA |
|---|---|---|
| 4 Lab2015_018 5% - 25 % v/v | 0 a (100.0%) | 0 b (100.0%) |
| 5 Lab2015_018 5% - 50 a % v/v | . | . |
| 6 Blanc - 10 a % v/v | 0 a (100.0%) | 0 b (100.0%) |

Gibberella avenacea - Maize (3D)

[Tableau 6]

| Jour | 5 DAA | 12 DAA |
|---|---|---|
| N° d'essai | 3 | 27 |
| 1 NT | 61 (0.0%) | 85 (0.0%) |
| 2 Lab2015_018 5% - 1 % v/v | 0 a (100.0%) | 32 (62%) |
| 3 Lab2015_018 5% - 5 % v/v | 0 a (100.0%) | 0 b (100.0%) |
| 4 Lab2015_018 5% - 25 % v/v | 0 a (100.0%) | 0 b (100.0%) |
| 5 Lab2015 018 5% - 50 a % v/v | . | . |
| 6 Blanc - 10 a % v/v | 0 a (100.0%) | 0 b (100.0%) |

Monographella nivalis - Blé d'hiver (4D)

[Tableau 7]

| Jour | 5 DAA | 12 DAA |
|---|---|---|
| N° d'essai | 4 | 28 |
| 1 NT | 75 (0.0%) | 85 (0.0%) |
| 2 Lab2015_018 5% - 1 % v/v | 0 a (100.0%) | 32 (62%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v | 0 a (100.0%) | 0 a (100.0%) |

Fusarium culmorum - Blé d'hiver (5D)

[Tableau 7]

| Jour | 5 DAA | 12 DAA |
|---|---|---|
| N° d'essai | 5 | 29 |
| 1 NT | 75 (0.0%) | 85 (0.0%) |
| 2 Lab2015_018 5% - 1 % v/v | 0 a (100.0%) | 13 a (85.1%) |
| 3 Lab2015_018 5% - 5 % v/v | 0 a (100.0%) | 0 b (100.0%) |
| 4 Lab2015_018 5% - 25 % v/v | 0 a (100.0%) | 0 b (100.0%) |

(suite)

| Jour | 5 DAA | 12 DAA |
|---|---|---|
| 5 Lab2015_018 5% - 50 a % v/v | . | . |
| 6 Blanc - 10 a % v/v | 0 a (100.0%) | 0 b (100.0%) |

Fusarium graminum - Blé d'hiver (6D)

[Tableau 8]

| Jour | 5 DAA | 12 DAA |
|---|---|---|
| N° d'essai | 6 | 30 |
| 1 NT | 61 (0.0%) | 85 (0.0%) |
| 2 Lab2015_018 5% - 1 % v/v | 0 a (100.0%) | 13 (85.1 %) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v | 0 a (100.0%) | 0 a (100.0%) |

Verticillium sp. - Tomate (7D)

[Tableau 9]

| Jour | 5 DAA | 12 DAA |
|---|---|---|
| N° d'essai | 7 | 31 |
| 1 NT | 63 (0.0%) | 85 (0.0%) |
| 2 Lab2015_018 5% - 1 % v/v | 0 a (100.0%) | 20 a (76.9%) |
| 3 Lab2015_018 5% - 5 % v/v | 0 a (100.0%) | 0 b (100.0%) |
| 4 Lab2015_018 5% - 25 % v/v | 0 a (100.0%) | 0 b (100.0%) |
| 5 Lab2015_018 5% - 50 a % v/v | . | . |
| 6 Blanc - 10 a % v/v | 0 a (100.0%) | 0 b (100.0%) |

Pythium irregulare - bétterave (8D)

[Tableau 10]

| Jour | 5 DAA | 12 DAA |
|---|---|---|
| N° d'essai | 8 | 32 |
| 1 NT | 85 (0.0%) | 85 (0.0%) |
| 2 Lab2015_018 5% - 1 % v/v | 0 a (100.0%) | 20 a (76.9%) |
| 3 Lab2015_018 5% - 5 % v/v | 0 a (100.0%) | 0 a (100.0% |
| 4 Lab2015_018 5% - 25 % v/v | 0 a (100.0%) | 0 a (100.0%) |
| 5 Lab2015_018 5% - 50 a % v/v \| | . | . |

(suite)

| Jour | 5 DAA | 12 DAA |
|---|---|---|
| N° d'essai | 8 | 32 |
| 6 Blanc - 10 a % v/v \| | 0 a (100.0%) | 0 a (100.0%) |

Thanatephorus cucumeris - Pomme de terre (9D)

[Tableau 11]

| Jour | 5 DAA | 12 DAA |
|---|---|---|
| N° d'essai | 9 | 33 |
| 1 NT | 82 (0.0%) | 85 (0.0%) |
| 2 Lab2015 018 5% - 1 % v/v | 0 a (100.0%) | 20 a (76.9%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v | 0 a (100.0%) | 0 a (100.0%) |

Fusarium solani - Pomme de terre (10D)

[Tableau 12]

| Jour | 5 DAA | 12 DAA |
|---|---|---|
| N° d'essai | 10 | 34 |
| 1 NT | 45 (0.0%) | 85 (0.0%) |
| 2 Lab2015_018 5% - 1 % v/v | 7 a (83.6%) | 48 a (43.9%) |
| 3 Lab2015_018 5% - 5 % v/v | 0 a (100.0%) | 0 b (100.0%) |
| 4 Lab2015_018 5% - 25 % v/v | 0 a (100.0%) | 0 b (100.0%) |
| 5 Lab2015_018 5% - 50 a % v/v | . | . |
| 6 Blanc - 10 a % v/v | 0 a (100.0%) | 0 b (100.0%) |

Thanatephorus cucumeris - Maïs (11D)

[Tableau 13]

| Jour | 5 DAA | 12 DAA |
|---|---|---|
| N° d'essai | 11 | 35 |
| 1 NT | | |
| 2 Lab2015_018 5% - 1 % v/v | | |
| 3 Lab2015_018 5% - 5 % v/v | | |
| 4 Lab2015_018 5% - 25 % v/v | | |
| 5 Lab2015_018 5% - 50 a % v/v | | . |

(suite)

| Jour | 5 DAA | 12 DAA |
|---|---|---|
| N° d'essai | 11 | 35 |
| 6 Blanc - 10 a % v/v | | |

Aucun développement de mycélium n'a été observé

Trichoderma viride - Maïs (12D)

[Tableau 14]

| Jour | 5 DAA | 12 DAA |
|---|---|---|
| N° d'essai | 12 | 36 |
| 1 NT | 85 (0.0%) | 85 (0.0%) |
| 2 Lab2015_018 5% - 1 % v/v | 0 a (100.0%) | 25 a (70.6%) |
| 3 Lab2015_018 5% - 5 % v/v | 0 a (100.0%) | 0 b (100.0%) |
| 4 Lab2015_018 5% - 25 % v/v | 0 a (100.0%) | 0 b (100.0%) |
| 5 Lab2015_018 5% - 50 a % v/v | . | . |
| 6 Blanc - 10 a % v/v | 0 a (100.0%) | 0 b (100.0%) |

Sclerotinia sclerotiorum - Tournesol (13D)

[Tableau 15]

| Jour | 5 DAA | 12 DAA |
|---|---|---|
| N° d'essai | 13 | 37 |
| 1 NT | 85 (0.0%) | 85 (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v | 0 a (100.0%) | 0 a (100.0%) |

Alternaria solani - Tomates (14D)

[Tableau 16]

| Jour | 5 DAA | 12 DAA |
|---|---|---|
| N° d'essai | 14 | 38 |
| 1 NT | 50 a (0.0%) | 85 (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |

(suite)

| Jour | 5 DAA | 12 DAA |
|---|---|---|
| N° d'essai | 14 | 38 |
| 5 Lab2015_018 5% - 50 a % v/v | . | . |
| 6 Blanc - 10 a % v/v | 0 a (100.0%) | 0 a (100.0%) |

Penicillium funiculosum (15D)

[Tableau 17]

| Jour | 5 DAA | 12 DAA |
|---|---|---|
| N° d'essai | 15 | 38 |
| 1 NT | 22 (0.0%) | 85 (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v | 0 a (100.0%) | 0 a (100.0%) |

Aspergillus niger (16D)

[Tableau 18]

| Jour | 5 DAA | 12 DAA |
|---|---|---|
| N° d'essai | 16 | 40 |
| 1 NT | 41 (0.0%) | 85 (0.0%) |
| 2 Lab2015 018 5% - 1 % v/v | 0 a (100.0%) | 26 (69.4%) |
| 3 Lab2015 018 5% - 5 % v/v | 0 a (100.0%) | 0 a (100.0%) |
| 4 Lab2015 018 5% - 25 % v/v | 0 a (100.0%) | 0 a (100.0%) |
| 5 Lab2015 018 5% - 50 a % v/v | . | . |
| 6 Blanc - 10 a % v/v | 0 a (100.0%) | 0 a (100.0%) |

Ceratocystis pilifera (17D)

[Tableau 19]

| Jour | 5 DAA | 12 DAA |
|---|---|---|
| N° d'essai | 17 | 41 |
| 1 NT | | |
| 2 Lab2015_018 5% - 1 % v/v | | |
| 3 Lab2015_018 5% - 5 % v/v | | |
| 4 Lab2015 018 5% - 25 % v/v | | |

(suite)

| Jour | 5 DAA | 12 DAA |
|---|---|---|
| N° d'essai | 17 | 41 |
| 5 Lab2015 018 5% - 50 a % v/v | | |
| 6 Blanc - 10 a % v/v | | |

Aucun développement de mycélium n'a été observé

Pyrenophora teres - orge (18D)

[Tableau 20]

| Jour | 5 DAA | 12 DAA |
|---|---|---|
| N° d'essai | 18 | 42 |
| 1 NT | 46 (0.0%) | 85 (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v \| | . | . |
| 6 Blanc - 10 a % v/v | 0 a (100.0%) | 0 a (100.0%) |

Cercospora beticola - betterave (19D)

[Tableau 21]

| Jour \| | 5 DAA | 12 DAA |
|---|---|---|
| N° d'essai | 19 | 4 3 |
| 1 NT | 13 (0.0%) | 40 a (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v \| | 0 a (100.0%) | 0 a (100.0%) |

Pyrenophora tritici-repentis - blé d'hiver (20D)

[Tableau 22]

| Jour | 5 DAA | 12 DAA |
|---|---|---|
| N° d'essai | 20 | 44 |
| 1 NT | 36 (0.0%) | 85 (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |

(suite)

| Jour | 5 DAA | 12 DAA |
|---|---|---|
| N° d'essai | 20 | 44 |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v | 0 a (100.0%) | 0 a (100.0%) |

Botryotinia fuckeliana - fraisier (21D)

[Tableau 23]

| Jour | 5 DAA | 12 DAA |
|---|---|---|
| N° d'essai | 21 | 45 |
| 1 NT | 85 (0.0%) | 85 (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v \| | . | . |
| 6 Blanc - 10 a % v/v | 0 a (100.0%) | 0 a (100.0%) |

Botryotinia fuckeliana - fraisier (22D)

[Tableau 24]

| Jour | 5 DAA | 12 DAA |
|---|---|---|
| N° d'essai | 22 | 46 |
| 1 NT | 85 (0.0%) | 85 (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v | 0 a (100.0%) | 0 a (100.0%) |

Phytophthora infestans - pomme de terre (23D)

[Tableau 25]

| Jour | 5 DAA | 12 DAA |
|---|---|---|
| N° d'essai | 23 | 47 |
| 1 NT | 10 a (0.0%) | 40 a (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |

(suite)

| Jour | 5 DAA | 12 DAA |
|---|---|---|
| N° d'essai | 23 | 47 |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v | 0 a (100.0%) | 0 a (100.0%) |

Phytophthora infestans - pomme de terre (24D)

[Tableau 26]

| Jour | 5 DAA | 12 DAA |
|---|---|---|
| N° d'essai | 24 | 48 |
| 1 NT | 14 (0.0%) | 31 (0.0%) |
| 2 Lab2015_018 5% - 1 % v/v | 0 a (100.0%) | 0 a (100.0%) |
| 3 Lab2015_018 5% - 5 % v/v | 0 a (100.0%) | 0 a (100.0%) |
| 4 Lab2015_018 5% - 25 % v/v | 0 a (100.0%) | 0 a (100.0%) |
| 5 Lab2015_018 5% - 50 a % v/v | . | . |
| 6 Blanc - 10 a % v/v | 0 a (100.0%) | 0 a (100.0%) |

**Conclusion**

L'extrait de pépins de raisin selon l'invention possède une activité fongicide à l'encontre de l'ensemble des souches de champignons phytopathogènes testées. Cet extrait de pépins de raisin est utile comme substance active antifongique d'origine naturelle pour la préparation de compositions phytosanitaires.

**Exemple 2 : Evaluation de l'activité antifongique de deux extraits de pépins de raisin selon l'invention**

Résumé

L'objectif de l'essai est d'évaluer l'efficacité d'extraits de raisin sur divers champignons phytopathogènes dans des boîtes de Pétri.
Les essais sont réalisés selon une méthodologie similaire à celle de l'Example 1, avec les différences suivantes :

Extraits de raisin :

L'extrait de raisin testé correspond :

- soit un extrait de raisin nommé ci-après Lab2015_018, obtenu selon le procédé du mode de réalisation (1) de la présente description ;
- soit un extrait de raisin nommé ci-après Lab2015_019, obtenu selon le procédé du mode de réalisation (2) de la présente description.

Une solution d'extrait de pépin de raisin à 5% en poids d'extrait de raisin par rapport au poids de la solution est préparé.
La solution est dispersée à différentes doses dans le milieu de culture à base de gélose dextrosée à la pomme de terre et d'eau déminéralisée.
Conditions de mesure

- le développement du mycélium a été mesuré 6 et 13 jours après l'incorporation de l'extrait.

Dose :

- les milieux de culture sont préparés avec des doses de : 0.3% v/v (soit 0,015% en poids d'extrait par rapport au poids de milieu de culture), 1% v/v (soit 0,05% en poids d'extrait par rapport au poids de milieu de culture), 3% v/v (soit 0.15% en poids d'extrait par rapport au poids de milieu de culture), 10% v/v (soit 0.5% en poids d'extrait par rapport au poids de milieu de culture).

Les conditions de traitement sont résumées dans le **Tableau 27** ci-dessous :

[Tableau 27]

| Nom traitement | Description |
|---|---|
| 1 NT | Boite de pétri ensemencée avec l'agent pathogène non traitée |
| 2 Lab2015_018 5% - 0.3 % v/v | Boite de pétri ensemencée avec l'agent pathogène et traitée à 0.1 % v/v % d'extrait pépins de raisin |
| 3 Lab2015_018 5% - 1 % v/v | Boite de pétri ensemencée avec l'agent pathogène et traitée à 1 % v/v % d'extrait de pépins de raisin |
| 4 Lab2015_018 5% - 3 % v/v | Boite de pétri ensemencée avec l'agent pathogène et traitée à 3 % v/v % d'extrait de pépins de raisin |
| 5 Lab2015_018 5% - 10 % v/v | Boite de pétri ensemencée avec l'agent pathogène et traitée à 10 % v/v % d'extrait de pépins de raisin |
| 6 Lab2015_019 5% - 0.3 % v/v | Boite de pétri ensemencée avec l'agent pathogène et traitée à 0.3 % v/v % d'extrait de pépins de raisin |
| 7 Lab2015_019 5% - 1 % v/v | Boite de pétri ensemencée avec l'agent pathogène et traitée à 1 % v/v % d'extrait de pépins de raisin |
| 8 Lab2015_019 5% - 3 % v/v | Boite de pétri ensemencée avec l'agent pathogène et traitée à 3 % v/v % d'extrait de pépins de raisin |
| 9 Lab2015_019 5% - 10 % v/v | Boite de pétri ensemencée avec l'agent pathogène et traitée à 10 % v/v % d'extrait de pépins de raisin |

Champignons phytopathogènes

Les caractéristiques des souches testées sont décrites ci-dessous.

Les souches de champignons phytopathogènes testées sont les souches n°7971, 79739242, 9222, 9246, 9267, 9220, 9245, 9268, 9266, 18523, 9278, 8112, 9218, 9219, 43842, 53834, 9248, 9277, 9276, 9269, 9257, 9247, et 24

Les caractéristiques des souches de champignons phytopathogènes étudiées sont détaillées dans le Tableau cci-dessous :

[Tableau 28]

| No. | Code | Nom scientifique | Nom commun | Attribut : | Attribut : |
|---|---|---|---|---|---|
| | | | | Plante | Souche No |
| 1D | FUSACU | Fusarium culmorum | fusariose des céréales | Blé d'hiver | 7971 |
| 2D | FUSAGR | Fusarium graminum | Fusarium graminum | Blé d'hiver | 7973 |
| 3D | RHIZSO | Thanatephorus cucumeris | rhizoctone noir de la pomme de terre | Pomme de terre | 9242 |
| 4D | FUSASO | Fusarium solani | fusariose du pied | Maïs | 9222 |
| 5D | FUSARE | Fusarium oxysporum redolens | Pourriture du pied de pois | Maïs | 9246 |
| 6D | SCLESC | Sclerotinia sclerotiorum | Pourriture blanche | Tournesol | 9267 |

(suite)

| No. | Code | Nom scientifique | Nom commun | Attribut : Plante | Attribut : Souche No |
|---|---|---|---|---|---|
| 7D | FUSASO | Fusarium solani | fusariose du pied | Pomme de terre | 9220 |
| 8D | FUSAOX | Fusarium oxysporum | piétin fusarien des céréales | Maïs | 9245 |
| 9D | HELMSO | Helminthosporium solani | gale argentée de la pomme de terre | Blé d'hiver | 9268 |
| 10D | CERCBE | Cercospora beticola | cercosporiose de la betterave | Betterave | 9266 |
| 11D | MONGNI | Monographella nivalis | moisissure des neiges | Blé d'hiver | 18523 |
| 12D | CERAPI | Ceratocystis pilifera | bois bleu | Non renseigné | 9278 |
| 13D | VERTSP | Verticillium sp | Verticilliose | Tomate | 8112 |
| 14D | PYTHIR | Pythium irregulare | nécrose vasculaire noire de la betterave | Betterave | 9218 |
| 15D | RHIZSO | Thanatephorus cucumeris | rhizoctone noir de la pomme de terre | Pomme de terre | 9219 |
| 16D | BOTRCI | Botryotinia fuckeliana | pourriture grise | Non renseigné | 43842 |
| 17D | PYTHUL | Pythium ultimum | Pourriture pythienne | Non renseigné | 53834 |
| 18D | GIBBAV | Gibberella avenacea | fusariose des céréales | Maïs | 9248 |
| 19D | ASPENI | Aspergillus niger | moisissure noire du bulbe de l'oignon | Non renseigné | 9277 |
| 20D | PENIFU | Penicillium funiculosum | Pourriture de l'ananas | Non renseigné | 9276 |
| 21D | ALTESO | Alternaria solani | alternariose des solanacées | Tomate | 9269 |
| 22D | TRCDVI | Trichoderma viride | Pourriture des fruits d'agrumes | Maïs | 9257 |
| 23D | FUSACU | Fusarium culmorum | fusariose des céréales | Maïs | 9247 |
| 24D | PHYTIN | Phytophthora infestans | mildiou de la pomme de terre | Pomme de terre | 24 |

Résultats

Fusarium culmorum - Blé d'hiver (1D)

[Tableau 29]

| Jour | 6 DAA |
|---|---|
| N° d'essai | 1 |
| 1 NT | 85 (0.0%) |
| 2 Lab2015_018 5% - 0.3 % v/v | 85 a (0.0%) |
| 3 Lab2015_018 5% - 1 % v/v | 85 a (0.0%) |
| 4 Lab2015_018 5% - 3 % v/v | 66 b (22.0%) |
| 5 Lab2015_018 5% - 10 % v/v | 48 d (43.1%) |
| 6 Lab2015_019 5% - 0.3 % v/v | 85 a (0.0%) |

(suite)

| Jour | 6 DAA |
|---|---|
| N° d'essai | 1 |
| 7 Lab2015_019 5% - 1 % v/v | 85 a (0.0%) |
| 8 Lab2015_019 5% - 3 % v/v | 76 a (11.0%) |
| 9 Lab2015_019 5% - 10 % v/v | 34 e (60.0%) |

Fusarium graminum - Blé d'hiver (2D)

[Tableau 29]

| Jour | 6 DAA |
|---|---|
| N° d'essai | 3 |
| 1 NT | 75 (0.0%) |
| 2 Lab2015_018 5% - 0.3 % v/v | |
| 3 Lab2015_018 5% - 1 % v/v | |
| 4 Lab2015_018 5% - 3 % v/v | 63 b (15.2%) |
| 5 Lab2015_018 5% - 10 % v/v | 43 c (42.0%) |
| 6 Lab2015_019 5% - 0.3 % v/v | |
| 7 Lab2015_019 5% - 1 % v/v | |
| 8 Lab2015_019 5% - 3 % v/v | 72 ab (4.0%) |
| 9 Lab2015_019 5% - 10 % v/v | 17 e (76.8%) |

Thanatephorus cucumeris - Pomme de terre (3D)

[Tableau 30]

| Jour | 6 DAA | 13 DAA |
|---|---|---|
| N° d'essai | 3 | 4 |
| 1 NT | 34 (0.0%) | 46 (0.0%) |
| 2 Lab2015_018 5% - 0.3 % v/v | 33 a (4.9%) | 47 a |
| 3 Lab2015_018 5% - 1 % v/v | 31 ab (9.7%) | 43 a (5.1%) |
| 4 Lab2015_018 5% - 3 % v/v | 28 bcd (19.4%) | 36 bc (21.9%) |
| 5 Lab2015_018 5% - 10 % v/v | 21 e (39.8%) | 28 de (38.7%) |
| 6 Lab2015_019 5% - 0.3 % v/v | 32 a (7.8%) | 45 a (0.7%) |
| 7 Lab2015_019 5% - 1 % v/v | 29 abc (15.5%) | 41 ab (9.5%) |
| 8 Lab2015_019 5% - 3 % v/v | 24 d (29.1%) | 24 e (47.4%) |
| 9 Lab2015_019 5% - 10 % v/v | 17 f (49.5%) | 24 e (47.4%) |

Fusarium solani - Maïs (4P)

[Tableau 31]

| Jour | 6 DAA | 13 DAA |
|---|---|---|
| N° d'essai | 5 | 6 |
| 1 NT | 55 (0.0%) | 85 (0.0%) |
| 2 Lab2015_018 5% - 0.3 % v/v | 51 a (7.3%) | 85 a (0.0%) |
| 3 Lab2015_018 5% - 1 % v/v | 47 b (13.9%) | 85 a (0.0%) |
| 4 Lab2015_018 5% - 3 % v/v | 42 c (24.2%) | 76 b (11.0%) |
| 5 Lab2015_018 5% - 10 % v/v | 25 e (55.2%) | 56 e (34.1%) |
| 6 Lab2015_019 5% - 0.3 % v/v | 52 a (6.1%) | 85 a (0.0%) |
| 7 Lab2015_019 5% - 1 % v/v | 47 b (15.3%) | 85 a (0.0%) |
| 8 Lab2015_019 5% - 3 % v/v | 36 d (33.9%) | 68 c (20.4%) |
| 9 Lab2015_019 5% - 10 % v/v | 21 f (61.2%) | 42 f (50.6%) |

Fusarium oxysporum redolens - Maïs (5D)

[Tableau 32]

| Jour | 6 DAA |
|---|---|
| N° d'essai | 7 |
| 1 NT | 75 (0.0%) |
| 2 Lab2015_018 5% - 0.3 % v/v | 73 a (2.7%) |
| 3 Lab2015_018 5% - 1 % v/v | 71 a (5.8%) |
| 4 Lab2015_018 5% - 3 % v/v | 65 a (13.8%) |
| 5 Lab2015_018 5% - 10 % v/v | 32 d (56.9%) |
| 6 Lab2015_019 5% - 0.3 % v/v | 71 a (4.9%) |
| 7 Lab2015_019 5% - 1 % v/v | 63 a (15.6%) |
| 8 Lab2015_019 5% - 3 % v/v | 42 c (44.0%) |
| 9 Lab2015_019 5% - 10 % v/v | 21 e (71.6%) |

Sclerotinia sclerotiorum - Sunflower (6D)

[Tableau 33]

| Jour | 6 DAA |
|---|---|
| N° d'essai | 8 |
| 1 NT | 85 (0.0%) |
| 2 Lab2015_018 5% - 0.3 % v/v | 85 a (0.0%) |
| 3 Lab2015_018 5% - 1 % v/v | 85 a (0.0%) |
| 4 Lab2015_018 5% - 3 % v/v | 85 a (0.0%) |
| 5 Lab2015_018 5% - 10 % v/v | 85 a (0.0%) |
| 6 Lab2015_019 5% - 0.3 % v/v | 85 a (0.0%) |
| 7 Lab2015_019 5% - 1 % v/v | 85 a (0.0%) |

(suite)

| Jour | 6 DAA |
|---|---|
| N° d'essai | 8 |
| 8 Lab2015_019 5% - 3 % v/v | 85 a (0.0%) |
| 9 Lab2015_019 5% - 10 % v/v | 85 a (0.0%) |

Fusarium oxysporum redolens - Maïs (7D)

[Tableau 34]

| Jour | 6 DAA | 13 DAA |
|---|---|---|
| N° d'essai | 5 | 6 |
| 1 NT | 54 (0.0%) | 85 (0.0%) |
| 2 Lab2015_018 5% - 0.3 % v/v | 51 a (5.0%) | 83 ab (2.4%) |
| 3 Lab2015_018 5% - 1 % v/v | 46 b (14.9%) | 80 b (6.4%) |
| 4 Lab2015_018 5% - 3 % v/v | 41 c (23.0%) | 70 c (17.3%) |
| 5 Lab2015_018 5% - 10 % v/v | 30 e (44.1%) | 56 e (33.7%) |
| 6 Lab2015_019 5% - 0.3 % v/v | 51 a (4.3%) | 82 ab (3.9%) |
| 7 Lab2015_019 5% - 1 % v/v | 44 bc (17.4%) | 73 c (13.7%) |
| 8 Lab2015_019 5% - 3 % v/v | 35 d (34.8%) | 53 f (38.0%) |
| 9 Lab2015_019 5% - 10 % v/v | 16 g (70.2%) | 29 g (65.9%) |

Fusarium oxysporum - Maïs (8D)

[Tableau 35]

| Jour | 6 DAA |
|---|---|
| N° d'essai | 11 |
| 1 NT | 68 (0.0%) |
| 2 Lab2015_ 018 5% - 0.3 % v/v | 65 a (3.9%) |
| 3 Lab2015_018 5% - 1 % v/v | 65 a (3.9%) |
| 4 Lab2015_018 5% - 3 % v/v | 59 ab (12.8%) |
| 5 Lab2015_018 5% - 10 % v/v | 34 d (49.8%) |
| 6 Lab2015_019 5% - 0.3 % v/v | 66 a (2.5%) |
| 7 Lab2015_019 5% - 1 % v/v | 61 ab (10.3%) |
| 8 Lab2015_019 5% - 3 % v/v | 46 c (31.5%) |
| 9 Lab2015_019 5% - 10 % v/v | 23 e (65.5%) |

Helminthosporium solani - Blé d'hiver (9D)

[Tableau 36]

| Jour | 6 DAA | 13 DAA |
|---|---|---|
| N° d’essai | 12 | 13 |
| 1 NT | 49 (0.0%) | 85 (0.0%) |
| 2 Lab2015_018 5% - 0.3 % v/v | 50 a (-1.0%) | 85 a (0.0%) |
| 3 Lab2015_018 5% - 1 % v/v | 21 c (58.2%) | 39 d (54.1%) |
| 4 Lab2015_018 5% - 3 % v/v | 12 d (75.5%) | 25 e (70.6%) |
| 5 Lab2015_018 5% - 10 % v/v | 1 e (98.0%) | 0 f (100.0%) |
| 6 Lab2015_019 5% - 0.3 % v/v | 31 b (36.1%) | 62 c (27.1%) |
| 7 Lab2015_019 5% - 1 % v/v | | |
| 8 Lab2015_019 5% - 3 % v/v | | |
| 9 Lab2015_019 5% - 10 % v/v | | |

Cercospora beticola - Betterave (10D)

[Tableau 37]

| Jour | 6 DAA | 13 DAA |
|---|---|---|
| N° d’essai | 14 | 15 |
| 1 NT | 21 (0.0%) | 35 (0.0%) |
| 2 Lab2015_018 5% - 0.3 % v/v | | |
| 3 Lab2015_018 5% - 1 % v/v | 23 a (-11.3%) | 39 a (-10.4%) |
| 4 Lab2015_018 5% - 3 % v/v | 19 a (8.1%) | 35 a (2.4%) |
| 5 Lab2015_018 5% - 10 % v/v | 9 b (58.9%) | 16 b (54.7%) |
| 6 Lab2015_019 5% - 0.3 % v/v | 24 a (-16.1%) | 42 a (-18.9%) |
| 7 Lab2015_019 5% - 1 % v/v | 22 a (-4.8%) | 40 a (-13.2%) |
| 8 Lab2015_019 5% - 3 % v/v | 19 a (8.1%) | 38 a (-6.1%) |
| 9 Lab2015_019 5% - 10 % v/v | 8 b (61.3%) | 5 c (85.8%) |

Monographella nivalis - Blé d’hiver (11D)

[Tableau 38]

| Jour | 6 DAA |
|---|---|
| N° d’essai | 16 |
| 1 NT | 79 (0.0%) |
| 2 Lab2015_018 5% - 0.3 % v/v | 67 a (14.4%) |
| 3 Lab2015_018 5% - 1 % v/v | 40 b (49.6%) |
| 4 Lab2015_018 5% - 3 % v/v | 1 c (99.2%) |
| 5 Lab2015_018 5% - 10 % v/v | 0 c (100.0%) |
| 6 Lab2015_019 5% - 0.3 % v/v | 62 a (21.2%) |
| 7 Lab2015_019 5% - 1 % v/v | 8 c (89.4%) |

(suite)

| Jour | 6 DAA |
|---|---|
| N° d'essai | 16 |
| 8 Lab2015_019 5% - 3 % v/v | 0 c (100.0%) |
| 9 Lab2015_019 5% - 10 % v/v | 0 c (100.0%) |

Ceratocystis pilifera (12D)

[Tableau 39]

| Jour | 6 DAA |
|---|---|
| N° d'essai | 17 |
| 1 NT | 19 (0.0%) |
| 2 Lab2015_018 5% - 0.3 % v/v | 20 ab (-3.4%) |
| 3 Lab2015_018 5% - 1 % v/v | 20 ab (-3.4%) |
| 4 Lab2015_018 5% - 3 % v/v | 20 ab (-3.4%) |
| 5 Lab2015_018 5% - 10 % v/v | 18 c (8.6%) |
| 6 Lab2015_019 5% - 0.3 % v/v | 20 ab (-3.4%) |
| 7 Lab2015_019 5% - 1 % v/v | 20 ab (-3.4%) |
| 8 Lab2015_019 5% - 3 % v/v | 19 bc (3.4%) |
| 9 Lab2015_019 5% - 10 % v/v | 17 c (10.3%) |

Verticillium sp. - Tomate (13D)

[Tableau 40]

| Jour | 6 DAA | 13 DAA |
|---|---|---|
| N° d'essai | 18 | 19 |
| 1 NT | 59 (0.0%) | 85 (0.0%) |
| 3 Lab2015_018 5% - 1 % v/v | 49 e (16.9%) | 76 b (10.2%) |
| 4 Lab2015_018 5% - 3 % v/v | 36 f (38.4%) | 64 c (24.7%) |
| 5 Lab2015_018 5% - 10 % v/v | 18 h (69.5%) | 48 d (43.5%) |
| 6 Lab2015_019 5% - 0.3 % v/v | 56 d (5.6%) | 85 a (0.0%) |
| 7 Lab2015_019 5% - 1 % v/v | 40 f (32.8%) | 62 c (26.7%) |
| 8 Lab2015_019 5% - 3 % v/v | 30 g (49.7%) | 49 d (42.0%) |
| 9 Lab2015_019 5% - 10 % v/v | 12 i (79.1%) | 37 e (56.5%) |

Pythium irregulare - Betterave (14D)

[Tableau 41]

| Jour | 6 DAA |
|---|---|
| N° d'essai | 8 |
| 1 NT | 85 (0.0%) |
| 2 Lab2015_018 5% - 0.3 % v/v | 85 a (0.0%) |
| 3 Lab2015_018 5% - 1 % v/v | 85 a (0.0%) |
| 4 Lab2015_018 5% - 3 % v/v | 8 b (90.2%) |
| 5 Lab2015_018 5% - 10 % v/v | 0 b (100.0%) |
| 6 Lab2015_019 5% - 0.3 % v/v | 85 a (0.0%) |
| 7 Lab2015_019 5% - 1 % v/v | 85 a (0.0%) |
| 8 Lab2015_019 5% - 3 % v/v | 0 b (100.0%) |
| 9 Lab2015_019 5% - 10 % v/v | 0 b (100.0%) |

Rhizoctonia solani/Thanatephorus cucumeris - Pomme de terre (15D)

[Tableau 42]

| Jour | 6 DAA |
|---|---|
| N° d'essai | 21 |
| 1 NT | 85 (0.0%) |
| 2 Lab2015_018 5% - 0.3 % v/v | 82 a (3.9%) |
| 3 Lab2015_018 5% - 1 % v/v | 72 b (15.3%) |
| 4 Lab2015_018 5% - 3 % v/v | 45 d (47.5%) |
| 5 Lab2015_018 5% - 10 % v/v | 0 f (100.0%) |
| 6 Lab2015_019 5% - 0.3 % v/v | 81 a (4.7%) |
| 7 Lab2015_019 5% - 1 % v/v | 61 c (28.2%) |
| 8 Lab2015_019 5% - 3 % v/v | 5 f (94.1 %) |
| 9 Lab2015_019 5% - 10 % v/v | 0 f (100.0%) |

Botryotinia fuckeliana (16D)

[Tableau 43]

| Jour | 6 DAA |
|---|---|
| N° d'essai | 22 |
| 1 NT | 85 (0.0%) |
| 2 Lab2015_018 5% - 0.3 % v/v | 85 a (0.0%) |
| 3 Lab2015_018 5% - 1 % v/v | 85 a (0.0%) |
| 4 Lab2015_018 5% - 3 % v/v | 85 a (0.0%) |
| 5 Lab2015_018 5% - 10 % v/v | 15 c (82.0%) |
| 6 Lab2015_019 5% - 0.3 % v/v | 85 a (0.0%) |
| 7 Lab2015_019 5% - 1 % v/v | 85 a (0.0%) |

(suite)

| Jour | 6 DAA |
|---|---|
| N° d'essai | 22 |
| 8 Lab2015_019 5% - 3 % v/v | 85 a (0.0%) |
| 9 Lab2015_019 5% - 10 % v/v | 40 b (52.9%) |

Pythium ultimum (17D)

[Tableau 44]

| Jour | 6 DAA |
|---|---|
| N° d'essai | 23 |
| 1 NT | 85 (0.0%) |
| 2 Lab2015_018 5% - 0.3 % v/v | 85 a (0.0%) |
| 3 Lab2015_018 5% - 1 % v/v | 85 a (0.0%) |
| 4 Lab2015_018 5% - 3 % v/v | 21 b (75.3%) |
| 5 Lab2015_018 5% - 10 % v/v | 0 b (100.0%) |
| 6 Lab2015_019 5% - 0.3 % v/v | 85 a (0.0%) |
| 7 Lab2015_019 5% - 1 % v/v | 85 a (0.0%) |
| 8 Lab2015_019 5% - 3 % v/v | 0 b (100.0%) |
| 9 Lab2015_019 5% - 10 % v/v | 0 b (100.0%) |

Gibberella avenacea - Maïs (18D)

[Tableau 45]

| Jour | 6 DAA | 13 DAA |
|---|---|---|
| N° d'essai | 24 | 25 |
| 1 NT | 60 (0.0%) | 82 (0.0%) |
| 2 Lab2015_018 5% - 0.3 % v/v | 68 a (-14.0%) | 82 a (-0.8%) |
| 3 Lab2015_018 5% - 1 % v/v | 73 a (-22.3%) | 85 a (-4.1%) |
| 4 Lab2015_018 5% - 3 % v/v | 66 ab (-11.2%) | 85 a (-4.1 %) |
| 5 Lab2015_018 5% - 10 % v/v | 27 d (54.7%) | 74 a (9.0%) |
| 6 Lab2015_019 5% - 0.3 % v/v | 70 a (-17.3%) | 82 a (-0.8%) |
| 7 Lab2015_019 5% - 1 % v/v | 73 a (-21.8%) | 85 a (-4.1%) |
| 8 Lab2015_019 5% - 3 % v/v | 57 bc (4.5%) | 85 a (-4.1%) |
| 9 Lab2015_019 5% - 10 % v/v | 11 e (81.0%) | 44 b (45.7%) |

Aspergillus niger (19D)

[Tableau 45]

| Jour | 6 DAA | 13 DAA |
|---|---|---|
| N° d'essai | 26 | 27 |
| 1 NT | 41 (0.0%) | 65 (0.0%) |
| 2 Lab2015_018 5% - 0.3 % v/v | 46 ab (-11.4%) | 68 bc (-5.1%) |
| 3 Lab2015_018 5% - 1 % v/v | 44 b (-6.5%) | 69 abc (-6.7%) |
| 4 Lab2015_018 5% - 3 % v/v | 38 c (6.5%) | 65 cd (0.5%) |
| 5 Lab2015_018 5% - 10 % v/v | 29 d (29.3%) | 66 bcd (-1.0%) |
| 6 Lab2015_019 5% - 0.3 % v/v | 46 ab (-13.0%) | 73 ab (-12.8%) |
| 7 Lab2015_019 5% - 1 % v/v | 48 ab (-17.1 %) | 76 a (-16.9%) |
| 8 Lab2015_019 5% - 3 % v/v | 38 c (6.5%) | 67 bc (-3.6%) |
| 9 Lab2015_019 5% - 10 % v/v | 27 d (34.1%) | 59 d (8.7%) |

Penicillium funiculosum (20D)

[Tableau 46]

| Jour | 6 DAA |
|---|---|
| N° d'essai | 28 |
| 1 NT | 40 (0.0%) |
| 2 Lab2015_018 5% - 0.3 % v/v | 30 a (25.0%) |
| 3 Lab2015_018 5% - 1 % v/v | 22 a (45.0%) |
| 4 Lab2015_018 5% - 3 % v/v | |
| 5 Lab2015_018 5% - 10 % v/v | |
| 6 Lab2015_019 5% - 0.3 % v/v | |
| 7 Lab2015_019 5% - 1 % v/v | |
| 8 Lab2015_019 5% - 3 % v/v | |
| 9 Lab2015_019 5% - 10 % v/v | |

Alternaria solani - Tomate (21D)

[Tableau 47]

| Jour | 6 DAA |
|---|---|
| N° d'essai | 29 |
| 1 NT | 54 (0.0%) |
| 2 Lab2015_018 5% - 0.3 % v/v | |
| 3 Lab2015_018 5% - 1 % v/v | |
| 4 Lab2015_018 5% - 3 % v/v | |
| 5 Lab2015_018 5% - 10 % v/v | |
| 6 Lab2015_019 5% - 0.3 % v/v | 58 ab (-7.3%) |
| 7 Lab2015_019 5% - 1 % v/v | 57 ab (-6.2%) |

(suite)

| Jour | 6 DAA |
|---|---|
| N° d'essai | 29 |
| 8 Lab2015_019 5% - 3 % v/v | 55 ab (-2.6%) |
| 9 Lab2015_019 5% - 10 % v/v | 45 c (15.5%) |

Hypocrea rufa/Trichoderma viride (22D)

[Tableau 48]

| Jour | 6 DAA |
|---|---|
| N° d'essai | 30 |
| 1 NT | 85 (0.0%) |
| 2 Lab2015_018 5% - 0.3 % v/v | |
| 3 Lab2015_018 5% - 1 % v/v | |
| 4 Lab2015_018 5% - 3 % v/v | |
| 5 Lab2015_018 5% - 10 % v/v | |
| 6 Lab2015_019 5% - 0.3 % v/v | 85 a (0.0%) |
| 7 Lab2015_019 5% - 1 % v/v | 85 a (0.0%) |
| 8 Lab2015_019 5% - 3 % v/v | 85 a (0.0%) |
| 9 Lab2015_019 5% - 10 % v/v | 24 c (71.4%) |

Fusarium culmorum - Maïs (23D)

[Tableau 49]

| Jour | 6 DAA |
|---|---|
| N° d'essai | 31 |
| 1 NT | 85 (0.0%) |
| 2 Lab2015_018 5% - 0.3 % v/v | 85 a (0.0%) |
| 3 Lab2015_018 5% - 1 % v/v | 85 a (0.0%) |
| 4 Lab2015_018 5% - 3 % v/v | 81 ab (5.1%) |
| 5 Lab2015_018 5% - 10 % v/v | 41 e (51.4%) |
| 6 Lab2015_019 5% - 0.3 % v/v | 85 a (0.0%) |
| 7 Lab2015_019 5% - 1 % v/v | 85 a (0.0%) |
| 8 Lab2015_019 5% - 3 % v/v | 56 c (33.7%) |
| 9 Lab2015_019 5% - 10 % v/v | 11 g (87.1%) |

Phytophthora infestans - Pomme de terre (24D)

[Tableau 50]

| | |
|---|---|
| Jour | 6 DAA |
| N° d'essai | 32 |
| 1 NT | 39 (0.0%) |
| 2 Lab2015_018 5% - 0.3 % v/v | 5 a (87.3%) |
| 3 Lab2015_018 5% - 1 % v/v | 0 b (100.0%) |
| 4 Lab2015_018 5% - 3 % v/v | 0 b (100.0%) |
| 5 Lab2015_018 5% - 10 % v/v | 0 b (100.0%) |
| 6 Lab2015_019 5% - 0.3 % v/v | 2 b (95.8%) |
| 7 Lab2015_019 5% - 1 % v/v | 0 b (100.0%) |
| 8 Lab2015_019 5% - 3 % v/v | 0 b (100.0%) |
| 9 Lab2015_019 5% - 10 % v/v | 0 b (100.0%) |

## Conclusion

Les extraits de pépins de raisin testés possèdent une activité fongicide à l'encontre des souches de champignons phytopathogènes supra. Ces extraits de pépins de raisin sont utiles comme substances actives antifongiques d'origine naturelle pour la préparation de composition phytosanitaires.

## Revendications

1. Procédé de défense d'une plante contre un ou plusieurs champignons phytopathogènes à l'aide d'une composition contenant, comme substance active antifongique, un extrait de raisin.

2. Procédé selon la revendication 1, dans lequel l'extrait de raisin est un extrait de pépins de raisin.

3. Procédé selon la revendication 1 ou 2, dans lequel l'extrait de raisin a une activité fongicide et/ou fongistatique.

4. Procédé selon l'une quelconque des revendications 1 à 3, dans laquelle la plante est choisie parmi les céréales telles que le riz, le blé, le maïs, l'orge, l'avoine, le seigle, le sorgho, le millet, la canne à sucre, des plantes ornementales comme les graminées à gazon, les miscanthus; les Rosaceae tels que l'abricotier, l'amandier, le cerisier, le cognassier, le fraisier, le framboisier, le pêcher, le poirier, le pommier, le prunier et aussi les plantes ornementales comme les rosiers, les potentilles; les Vitaceae tels que les vignes et notamment Vitis Vinifera; les Brassicacae tels que les colzas, les moutardes, les choux, les navets, les radis; les Amaranthaceae tels que les betteraves, les épinards; les Cucurbitaceae tels que les concombres, les citrouilles, les courges, les melons, les pastèques; les Solanaceae tels que les pommes de terre, les tomates, les aubergines, les poivrons, les piments, les tabacs, les pétunias; les Rutaceae tels que les citronniers, les orangers les pamplemoussiers; les Asteraceae tels que les chicorées dont l'endive, les laitues, les artichauts, les tournesols, mais aussi des plantes ornementales comme les chrysanthèmes, les dahlias, les asters; les Fabaceae tels que les pois, les haricots, le soja, les lentilles, les arachides, les luzernes mais aussi des plantes ornementales comme les lupins, les mimosas; les Juglandaceae tels que le noyer, les Betulaceae tels que le noisetier, les Anacardiaceae tels que le pistachier, le manguier, l'anarcardier, les Fagaceae tels que le chataignier, les Moraceae tels que le figuier, le murier blanc, les Oleaceae tels que l'olivier, les Actinidiaceae tel que l'arbre a kiwi, les Lauraceae tels que l'avocatier, les Musaccae tels que le bananier, les Rubiaceae tels que la garance, le caféier, les Theaceae tels que le camellia, le théier, les Sterculiaceae tels que le cacaoyer; les Musaceae tels que le bananier, les Liliaceae tels que les tulipes, les jacinthes, les narcisses; les Apiacea tels que les persils, les céleris, les fenouils, les panais.

5. Procédé selon l'une quelconque des revendications 1 à 4, dans lequel le champignon phytopathogène est choisi parmi Fusarium spp. responsable de la fusariose de nombreuses plantes dont des céréales telles que le blé et le maïs, le framboisier, le peuplier, la pomme de terre tel que f. culmorum, f. graminum f. oxysporum, f. solani, f.nivale, f. germinearum; Giberella spp. responsable de la fusariose de nombreuses plantes dont le blé, le maïs, le framboisier, le peuplier, la pomme de terre tel que Gibberella avenacea; Monographella spp. responsable de la moisissure des

neiges typiquement du blé tel que Monographella nivalis ; Verticillium spp. responsable de la verticilliose, Pythium spp. responsable de la fonte des semis ou pourriture racinaire de la betterave, poivrons, courges, chrysanthèmes, gazon, tel que pythium irregulare ; Thanatephorus spp. responsable du rhizoctone brun, de fonte de semis sur de nombreuses plantes dont tomate, pomme de terre, betterave, maïs, carotte, haricot, choux frisé, salsifis tel que Thanatephorus cucumeris; Trichoderma spp. responsable de la pourriture de nombreux agrumes tel que Trichoderma viride; Sclerotinia spp. responsable de la sclérotiniose ou pourriture blanche de nombreuses plantes dont blé, colza, tournesol, soja, lin, pois, féverole, carottes, céleris, haricots, pomme de terre tel que Sclerotinia sclerotiorum; Alternaria spp. responsable de l'alternariose des solanacées dont la tomate tel que Alternaria solani; Penicillium spp. responsable de la fusariose de l'ananas tel que Penicillium funiculosum ; Aspergillus spp. responsable de la moisissure noire de nombreuses plantes dont l'ail et l'oignon, tel que Aspergillus niger, ou pouvant produire des toxines dans les grains de céréales pouvant produire des toxines dans les grains de céréales tel qu'Aspergillus ochraceus; Ceratocystis spp. responsable de flétrissement chez nombreuses plantes dont le cacaoyer, la patate douce, le platane tel que Ceratocystis pilifera ou Ceratocystis platani; Pyrenophora spp. responsable de l'helminthosporiose de l'orge tel que Pyrenophora teres ; Cercospora spp. responsable de la cercosporiose de nombreuses plantes dont la betterave tel que Cercospora beticola; Pyrenophora spp. responsable de l'helminthosporiose de plantes dont le blé et l'orge, tel que Pyrenophora triticirepentis et Pyrenophora graminea; Botryotinia spp. responsable de la pourriture grise de nombreuses plantes dont tomate, framboise, fraise, tournesol, haricot, concombre, salade, rose, ail, ognon, roses, gerberas, pivoines, oeillets, lis et chrysanthèmes, tel que Botryotinia fuckeliana ou Botrytis cinerea; Phytophthora spp. responsable du mildiou et de chancres de nombreuses plantes dont la pomme de terre la tomate, la vigne, le châtaignier ou le pommier, tel que Phytophthora infestans ou Phytophtora cactorum; Pyricularia spp. Tels que Magnaporte grisea responsable de la pyriculariose des céréales ; Puccinia spp. tels que puccinia triticina responsable de la rouille du blé, puccinia graminis responsable des rouilles des céréales, Oidium neolycopersici responsable de l'oïdium de la tomate, Blumeria graminis responsable du blanc des céréales; Colletotrichum spp. notamment Colletotrichum acutatum responsable des anthracnoses sur fraisiers et oliviers; Alternaria spp. responsable de l'altemariose sur les feuilles de carottes et les pommes de terre; Mycosphaerella spp. notamment M. graminicol (ou Zymoseptoria tritici) responsable de la septoriose sur le blé et Septoria lycopersici responsable de le septoriose de la tomate; Venturia sp. tel que Venturia inaequalis responsable de la tavelure du pommier; Phomopsis spp. notamment Phomopsis viticola responsable de l'excoriose du bois de la vigne; Helminthosporium sp. notamment Helminthosporium avenae responsable de la fonte des semis de l'avoin; Monilia spp. notamment Monilia fructigena responsable de la moniliose des arbres fruitiers notamment des prunes; Cochliobolus sp. notamment Chochiobulus carbonum (Bipolaris zeicola) responsable de l'helminthosporiose du mais; Ramularia beticola responsable de la ramulariose de la betterave; Rhynchosporium spp. tel que Rhynchosporium secalis responsable de la maladie des taches brunes de l'orge; Cladosporium sp. tel que Cladosporium fulvum responsable de la cladosporiose sur tomates, Didymella sp. tel que Didymella bryoniae responsable du chancre gommeux des cucurbitacees; Phoma sp. tels que Phoma betae responsable de la maladie du pied noir de la betterave, Phoma batata sur patate douce, Phoma solani responsable de nécroses racinaires (fonte de semis); Ascophyta sp. tel que Ascophyta tritici sur blé; Stemphylium sp. tel que S. solani, S. lycopersici responsable de la stemphyliose sur tomates, Stemphylium vesicarium (ou pleospora allii) responsable de la stemphyliose du poirier; Glomerella cingulata responsable de l'anthracnose sur pommier et poirier; Plasmopara viticola responsable du mildiou de la vigne; Bremia lactucae pour le mildiou de la laitue; Peronospora sp. responsable des mildiou sur betterave, épinard, luzerne, chou, tabac, soja et pois, Diaporthe sp. tel que Diaporthe ampelina provoquant des dépérissements des pieds de vigne, diaporthe phaseolorum responsable de la phomopsis du soja, Elsinoe sp. tel qu'Elsinoe ampelina responsable de l'anthracnose de la vigne, Verticilium sp. tel que Verticillium dahliae responsable de la verticilliose sur tournesol; Pyrenopezzia sp. tel que Pyrenopezzia brassicae responsable de la cylindrosporiose du colza.

**6.** Procédé selon l'une quelconque des revendications 1 à 5, comprenant l'application, à titre curatif ou préventif, de la composition sur la plante de préférence sur les parties aériennes de la plante telles que les feuilles et/ou les fruits de la plante, sur les semences de la plante, ou sur le sol où pousse où est susceptible de pousser la plante.

**7.** Procédé selon l'une quelconque des revendications 1 à 6, dans laquelle la composition comprend entre 1% et 90% d'extrait de raisin, de préférence de 5 à 50% d'extrait de raisin, % en poids total de composition.

**8.** Composition phytosanitaire comprenant, en tant que substance active antifongique, un extrait de raisin de préférence tel que défini dans la revendication 1 ou 2, un diluant agronomiquement acceptable et un adjuvant agronomiquement acceptable.

**9.** Composition selon la revendication 8, dans laquelle la composition comprend entre 1% et 90% d'extrait de raisin, de préférence de 5 à 50% d'extrait de raisin, % en poids total de composition.

**10.** Utilisation d'un extrait de raisin de préférence tel que défini dans la revendication 1 ou 2 à titre de substance active antifongique pour la préparation d'une composition phytosanitaire selon l'une quelconque des revendications 8 ou 9 ou pour la préparation d'une composition intermédiaire de ladite composition.

Europäisches Patentamt
European Patent Office
Office européen des brevets

# RAPPORT DE RECHERCHE EUROPEENNE

Numéro de la demande
EP 23 30 6598

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/121742 A1 (MAIREL FRANCOIS [FR]) 17 mai 2012 (2012-05-17) * alinéas [0062] - [0066], [0090]; revendications 4, 5; exemples 1, 2, 3 * ----- | 1-10 | INV. A01N65/08 A01P3/00 |
| X | ES 2 936 218 A1 (BODEGA MATARROMERA S L [ES]) 15 mars 2023 (2023-03-15) * revendications 1, 6, 8, 11, 15 * ----- | 1,3,4,6, 10 | |
| X | US 2020/077647 A1 (ROLET FANNY [FR] ET AL) 12 mars 2020 (2020-03-12) * alinéas [0043], [0044], [0047]; exemples 1-4 * ----- | 1,3,5,6, 10 | |
| X | WO 2016/106467 A1 (UNIV SANTIAGO CHILE [CL]) 7 juillet 2016 (2016-07-07) * revendications 1, 11-13 * ----- | 1,3,6,10 | |
| | | | DOMAINES TECHNIQUES RECHERCHES (IPC) |
| | | | A01N A01P |

Le présent rapport a été établi pour toutes les revendications

1

| Lieu de la recherche | Date d'achèvement de la recherche | Examinateur |
|---|---|---|
| Munich | 6 février 2024 | Beligny, Samuel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 23 30 6598

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2024

| Document brevet cité au rapport de recherche | Date de publication | Membre(s) de la famille de brevet(s) | Date de publication |
|---|---|---|---|
| US 2012121742 A1 | 17-05-2012 | AU 2009319417 A1 | 03-06-2010 |
| | | BR PI0921873 A2 | 04-08-2015 |
| | | CA 2744514 A1 | 03-06-2010 |
| | | CL 2011001210 A1 | 02-09-2011 |
| | | CN 102223802 A | 19-10-2011 |
| | | DK 2189062 T3 | 19-08-2013 |
| | | EP 2189062 A1 | 26-05-2010 |
| | | ES 2431338 T3 | 26-11-2013 |
| | | HK 1140914 A1 | 29-10-2010 |
| | | HR P20130979 T1 | 22-11-2013 |
| | | IL 213081 A | 21-04-2016 |
| | | JP 5559188 B2 | 23-07-2014 |
| | | JP 2012509850 A | 26-04-2012 |
| | | KR 20110089157 A | 04-08-2011 |
| | | PL 2189062 T3 | 29-11-2013 |
| | | PT 2189062 E | 22-10-2013 |
| | | RU 2011120805 A | 10-01-2013 |
| | | SG 171792 A1 | 28-07-2011 |
| | | SI 2189062 T1 | 29-11-2013 |
| | | US 2012121742 A1 | 17-05-2012 |
| | | WO 2010060528 A2 | 03-06-2010 |
| ES 2936218 A1 | 15-03-2023 | AUCUN | |
| US 2020077647 A1 | 12-03-2020 | AU 2017382943 A1 | 25-07-2019 |
| | | BR 112019012712 A2 | 26-11-2019 |
| | | CA 3046113 A1 | 28-06-2018 |
| | | CL 2019001748 A1 | 25-10-2019 |
| | | CN 110213967 A | 06-09-2019 |
| | | EP 3557995 A1 | 30-10-2019 |
| | | FR 3061176 A1 | 29-06-2018 |
| | | IL 267396 A | 29-08-2019 |
| | | JP 2020509993 A | 02-04-2020 |
| | | JP 2022188772 A | 21-12-2022 |
| | | KR 20190098983 A | 23-08-2019 |
| | | MA 47080 A | 30-10-2019 |
| | | US 2020077647 A1 | 12-03-2020 |
| | | US 2023120978 A1 | 20-04-2023 |
| | | WO 2018115296 A1 | 28-06-2018 |
| WO 2016106467 A1 | 07-07-2016 | CL 2014003609 A1 | 10-07-2015 |
| | | WO 2016106467 A1 | 07-07-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2092743
- FR 2722498


### Littérature non-brevet citée dans la description


- **JUN-XIA AN et al.** *Journal of Antibiotics*, 2023, vol. 76, 131-182